(19) Europäisches Patentamt
European Patent Office
Office européen des brevets

(11) EP 1 904 543 B1

(12) EUROPÄISCHE PATENTSCHRIFT

(45) Veröffentlichungstag und Bekanntmachung des Hinweises auf die Patenterteilung:
**02.09.2009 Patentblatt 2009/36**

(21) Anmeldenummer: **06762203.5**

(22) Anmeldetag: **27.06.2006**

(51) Int Cl.:
***C08F 263/02*** *(2006.01)* ***C08F 2/22*** *(2006.01)*
***C09D 151/00*** *(2006.01)*

(86) Internationale Anmeldenummer:
**PCT/EP2006/006173**

(87) Internationale Veröffentlichungsnummer:
**WO 2007/006413 (18.01.2007 Gazette 2007/03)**

(54) **WÄSSRIGE KUNSTSTOFF DISPERSIONEN, VERFAHREN ZU DEREN HERSTELLUNG SOWIE DEREN VERWENDUNG**

AQUEOUS PLASTIC DISPERSIONS, METHOD FOR PRODUCING THE SAME AND THEIR USE

DISPERSIONS DE PLASTIQUE AQUEUSES, LEURS PROCEDES DE PRODUCTION ET LEUR UTILISATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.07.2005 DE 102005032194**

(43) Veröffentlichungstag der Anmeldung:
**02.04.2008 Patentblatt 2008/14**

(73) Patentinhaber: **Celanese Emulsions GmbH**
**61476 Kronberg/Ts. (DE)**

(72) Erfinder:
- **PETRI, Harald**
**65326 Arbergen (DE)**
- **CABRERA, Ivan**
**63303 Dreieich (DE)**

(74) Vertreter: **Ackermann, Joachim et al**
**Postfach 11 13 26**
**60048 Frankfurt am Main (DE)**

(56) Entgegenhaltungen:
**EP-A1- 1 174 447** **WO-A2-02/074856**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 904 543 B1

## Beschreibung

Die vorliegende Erfindung betrifft wässrige Kunststoff-Dispersionen auf Basis von Vinylester-Copolymerisaten, die im wesentlichen durch nichtionische Komponenten stabilisiert sind, Verfahren zu deren Herstellung sowie deren Verwendung.

Kunststoff-Dispersionen werden als Bindemittel zur Herstellung sowohl pigmentierter als auch nicht pigmentierter, wässriger Zubereitungen, die z.B. als Beschichtungsmassen Verwendung finden, eingesetzt. Zu den pigmentierten Beschichtungsmassen zählen insbesondere Lasuren, Dispersionslacke, Dispersionsfarben, kunstharzgebundene Putze, Dichtungsmassen und Spachtelmassen, die eine breite Anwendung sowohl im Bautenschutz als auch im dekorativen Bereich finden. Zu den nicht pigmentierten Beschichtungsmassen zählen beispielsweise Klarlacke. Darüber hinaus stellen Kunststoff-Dispersionen die Hauptkomponente von wasserbasierenden Lebensmittelbeschichtungen dar, die das Substrat vor Austrocknung sowie schädlichen Umwelteinflüssen schützen sollen.

Beschichtungszusammensetzungen müssen einer Vielzahl von praktischen Anforderungen genügen, beispielsweise neben einer guten Verarbeitbarkeit der wässrigen Zubereitungen auch bei niedrigen Verarbeitungstemperaturen, eine ausreichende Blockfestigkeit der getrockneten Beschichtungen sowie eine ausreichende Beständigkeit der Beschichtungen gegenüber abrasiver Beanspruchung aufweisen.

Im Falle bindemittelreicher Beschichtungszusammensetzungen (niedrige Pigmentvolumenkonzentration "PVK"), deren Oberflächen durch einen hohen Anteil an polymerem Bindemittel gekennzeichnet sind, treten neben der Blockfestigkeit und Abriebbeständigkeit, zudem Glanzeigenschaften der getrockneten Beschichtungen in den Vordergrund.

Diesen Anforderungen an Beschichtungszusammensetzungen wird im Stand der Technik durch unterschiedlichste Formulierungsansätze Rechnung getragen.

Einige dieser Ansätze beinhalten den Einsatz von organischen Lösungsmitteln und/oder Weichmachern. Die Freisetzung von flüchtigen, organischen Bestandteilen ist jedoch aufgrund ihres schädlichen Einflusses auf Mensch und Umwelt, insbesondere bei Applikationen in Innenräumen, nicht erwünscht.

Von daher bestand und besteht ein großer Bedarf an wässrigen Kunststoff-Dispersionen, die es erlauben, weichmacher- und lösungsmittelfreie Beschichtungssysteme mit hohen Bindemittelgehalten (niedrige PVK) oder mit niedrigen Bindemittelgehalten (hohe PVK) und einer niedrigen Verfilmungstemperatur zu formulieren, die den gestellten Anforderungen hinsichtlich Blockfestigkeit, Glanz- und Abriebeigenschaften genügen.

Aus der DE-A-198 11 314 sind mehrstufige Acrylester-Dispersionen bekannt, die Itaconsäure als saures Comonomer enthalten und vorzugsweise mit anionischen Emulgatoren, bzw. mit Mischungen aus anionischen und nichtionischen Emulgatoren als Stabilisatoren hergestellt werden. Die beschriebenen Bindemittel zeigen vorteilhafte Nassabriebfestigkeiten und Blockfestigkeiten allerdings nur in weichmacherhaltigen Farbformulierungen mit einer niedrigen PVK von 46,9 %.

Die EP-A-0 347 760 empfiehlt den Einsatz spezieller Sulfobernsteinamidsalze als Nachgabe und/oder als Stabilisatoren während der Polymerisation von Acrylester und Styrol/Acrylester-Dispersionen Mit den so erhaltenen Bindemitteln lassen sich weichmacherhaltige Glanzlacke mit hoher Blockfestigkeit herstellen. Dagegen zeigen alle anderen untersuchten ionischen Emulgatoren keine Wirkung.

EP-A-0 609 756 offenbart mehrstufige Acrylester-, Styrol/Acrylester- und Vinyl/Acrylester-Dispersionen, wobei eine der Polymerphasen eine Glasübergangstemperatur im Bereich von -55 bis -5°C und eine weitere Polymerphase eine Glasübergangstemperatur im Bereich von 0 bis 50°C aufweisen muss. Zur Herstellung dieser Dispersionen werden bevorzugt mindestens ein anionischer Emulgator und optional mindestens ein nichtionischer Emulgator verwendet. In den Beispielen werden Stabilisierungssysteme bestehend aus nichtionischen und ionischen Emulgatoren im Verhältnis von ca. 1:1 offenbart. Sie zeigen, dass die mit den erfindungsgemäßen Bindemitteln formulierten lösungsmittelfreien Semi-gloss-, Satin- und Silk-Farben-Beispiele Blockfestigkeiten aufweisen, die mit lösungsmittelhaltigen Systemen vergleichbar sind, was durch das Vorliegen von zwei Polymerphasen mit den speziellen Glasübergangstemperatur Bereichen erreicht wird.

In der EP-A-1 018 535 werden lösungsmittelfreie Beschichtungszusammensetzungen mit verbesserter Blockfestigkeit beschrieben, die als Bindemittel eine Mischung aus einer Acrylester- und einer Vinylester-Copolymer-Dispersion enthalten. Kennzeichen der in der Dispersionsmischung im Unterschuss eingesetzten Acrylesterkomponente ist neben der notwendigen Copolymerisation sterisch gehinderter Silane die Verwendung mindestens eines anionischen Emulgators während der Herstellung dieser Dispersionskomponente zur Erzielung der gewünschten hohen Blockfestigkeiten der mit diesen Bindemitteln hergestellten Beschichtungszusammensetzungen. Die ausschließliche Verwendung nichtionischer Tenside bei der Herstellung der Acrylesterkomponente führt nach Lehre dieser Schrift zu ungenügenden Blockfestigkeiten. Im Gegensatz dazu hat die Natur des Emulgators, der bei der Herstellung der im Überschuss eingesetzten Vinylester-Komponente verwendet wird, keinen Einfluss auf die Blockfestigkeit der resultierenden Beschichtungen.

Vinylester-Dispersionen mit heterogener Morphologie werden in einer Reihe von Patentanmeldungen beschrieben.

So werden in der DE-A-1 98 53 461 schutzkolloidstabilisierte Copolymerisat-Latexteilchen mit heterogener Morphologie offenbart, die aus einer harten und einer welchen Polymerphase aufgebaut sind, wobei die bevorzugten Glasübergangstemperaturen der einzelnen Phasen -40 bis +20°C, bzw. +20 bis +35°C betragen.

Die Emulsionspolymerisation zur Herstellung dieser Dispersionen, aus denen nach ihrer Trocknung Dispersionspulver hergestellt werden, schreibt die Verwendung von Schutzkolloiden vor. Der Einsatz von oberflächenaktiven Substanzen, wie z.B. Emulgatoren, kann gegebenenfalls erfolgen. Ebenfalls offenbart wird die Verwendung der Copolymerisat-Latexteilchen als Bindemittel in Dispersionsfarben und Putzen.

In der DE-A-197 39 936 werden im wesentlichen mit Polyvinylalkohol als Schutzkolloid stabilisierte, weichmacherfreie, heterogene Vinylacetat-Ethen Dispersionen offenbart, die durch Saatpolymerisation eines Copolymerisats A mit einer Glasübergangstemperatur > 20°C in Gegenwart einer Saatgrundlage aus einem Copolymerisat B mit einer Glasübergangstemperatur < 20°C hergestellt werden.

Die zuvor in der DE-A-198 53 461 und der DE-A-197 39 936 beschriebenen Dispersionen werden im wesentlichen durch Schutzkolloide stabilisiert. Durch den damit verbundenen hohen Gehalt an wasserlöslichen, leicht quellbaren, polymeren Stabilisatoren ist im Falle von Beschichtungszusammensetzungen, die diese Dispersionen als Bindemittel enthalten, mit einer hohen Wasseraufnahme der Beschichtung zu rechnen, was zu einer geringen Abriebbeständigkeit bei abrasiver Belastung im gequollenen Zustand führt.

In der EP-A-0 444 827 werden Vinylester-Ethen-Acrylester-Dispersionen mit Kern-Schale-Struktur beschrieben, wobei die Zusammensetzung der Polymerphasen von Kern und Schale so gewählt wird, dass das Copolymer nur eine Glasübergangstemperatur im Bereich von -30 bis 0°C aufweist. Durch die gleichermaßen vorgeschriebene Copolymerisation von Vinylsilan werden Dispersionen erhalten, die sich als vorteilhafte Bindemittel für rissüberbrückende Beschichtungsmittel eignen. Die niedrige Glasübergangstemperatur des Kern-Schale-Copolymers schließt den Einsatz dieser weichen Copolymer-Dispersionen als Bindemittel zur Formulierung blockfester, bindemittelreicher Beschichtungszusammensetzungen allerdings aus.

Schließlich sind aus der WO-A-02/74,856 wässrige Kunststoff-Dispersion auf Basis eines Vinylester-Copolymerisats bekannt, das durch Mehrstufenpolymerisation einer harten und einer weichen Monomermischung erhältlich ist. Die Dispersion ist überwiegend ionisch stabilisiert. Nichtionische Emulgatoren und/oder von Monomeren mit nichtionischen stabilisierenden Gruppen abgeleitete Struktureinheiten können zwar vorliegen, doch werden diese immer im Unterschuß eingesetzt. Das Masseverhältnis von ionischen zu nichtionischen stabilisierenden Gruppen (Emulgatoren und/oder einpolymerisierte Gruppen) darf nicht weniger als 1 betragen. In einem Vergleichsbeispiel wird gezeigt, dass die anwendungstechnischen Eigenschaften, insbesondere die Blockfestigkeit, von Beschichtungsmitteln, welche Bindemittel mit einem vergleichsweise hohen Anteil an nichtionischen stabilisierenden Gruppen aufweisen, nicht befriedigend sind.

Eine Aufgabe der vorliegenden Erfindung war es daher, die Nachteile der bekannten, heterogenen Vinylester-Dispersionen zu überwinden, insbesondere die Abriebfestigkeit und Schaumbildung der mit diesen Dispersionen formulierten Beschichtungszusammensetzungen, und neue Vinylester-Dispersionen zur Verfügung zu stellen, die es erlauben weichmacher- und lösemittelfreie Beschichtungszusammensetzungen zur Verfügung zu stellen, die bei niedrigen Temperaturen rissfreie Beschichtungsfilme bilden und sich durch eine verbesserte Blockfestigkeit und eine ausgezeichnete Abriebfestigkeit auszeichnen.

Überraschenderweise wurde nun gefunden, dass sich Dispersionen heterogener Vinylester-Copolymere, die neben ionischen Stabilisatoren einen vergleichsweise hohen Anteil an nichtionischen Stabilisatoren enthalten und die zumindest in einer Polymerphase einpolymerisierte Silicium-organische Verbindungen enthalten, sich hervorragend zur Formulierung von lösungsmittelfreien Beschichtungsmitteln mit geringer Schaumbildung eignen, die sich durch eine ausgezeichnete Kombination von Blockfestigkeit, Glanz und Abriebbeständigkeit der damit hergestellten Beschichtungen auszeichnen.

Gegenstand der vorliegenden Erfindung ist eine wässrige Kunststoff-Dispersion auf Basis eines Vinylester-Copolymerisats mit einem Feststoffgehalt von bis zu 80 Gew.-% und einer Mindestfilmbildetemperatur unterhalb von 20°C, wobei das Vinylester-Copolymerisat durch folgende Merkmale gekennzeichnet ist

- es ist ein Mehrstufenpolymerisat und leitet sich von mindestens einem Homo- oder Copolymerisat A und von mindestens einem Homo- oder Copolymerisat B ab,
- das Copolymerisat A leitet sich von einer Monomerzusammensetzung A ab, die ein weiches Copolymerisat mit einer Glasübergangstemperatur im Bereich von 0 bis 20°C ergeben würde,
- das Homo- oder Copolymerisat B leitet sich von einer Monomerzusammensetzung B ab, die ein hartes Homo- oder Copolymerisat mit einer Glasübergangstemperatur im Bereich von 20 bis 50°C ergeben würde
- es werden Monomerzusammensetzungen A und B eingesetzt, die Polymerisate A und B ergeben, deren Glasübergangstemperaturen sich um mindestens 10 K unterscheiden,
- die Summe der Anteile der Polymerisate A und B im Vinylester-Copolymerisat beträgt mindestens 50 Gew.-%,

bezogen auf das Vinylester-Copolymerisat,

- das Gewichtsverhältnis von Monomerzusammensetzung A zu Monomerzusammensetzung B liegt im Bereich von 95/5 bis 5/95,
- die Monomerzusammensetzung A enthält 50 bis 100 Gew.-% mindestens eines Vinylesters von Carbonsäuren mit 1 bis 18 C-Atomen (M1), bezogen auf die Gesamtmasse der in Monomerzusammensetzung A eingesetzten Monomeren,
- die Monomerzusammensetzung B enthält 50 bis 100 Gew.-% mindestens eines Vinylesters von Carbonsäuren mit 1 bis 18 C-Atomen (M1), bezogen auf die Gesamtmasse der in Monomerzusammensetzung B eingesetzten Monomeren,
- mindestens eine der Monomerzusammensetzungen A oder B enthält 0,05 bis 10 Gew.-% mindestens einer ungesättigten, copolymerisierbaren Silicium-organischen Verbindung (M4), bezogen auf die Gesamtmasse der in dieser Monomerzusammensetzung eingesetzten Monomeren,
- das Vinylester Copolymerisat enthält, bezogen auf die Gesamtmasse der zur Herstellung des Vinylester Copolymerisats verwendeten Monomeren, 0 bis 3 Gew.-% von mindestens einem ethylenisch ungesättigten, ionischen Monomeren (M3) abgeleitete Struktureinheiten,
- das Vinylester Copolymerisat enthält, bezogen auf die Gesamtmasse der zur Herstellung des Vinylester Copolymerisats verwendeten Monomeren, 0 bis 10 Gew.-% von mindestens einem ethylenisch ungesättigten, nichtionischen Monomeren (M5) abgeleitete Struktureinheiten,

die wässrige Kunststoff-Dispersion enhält 0 bis 3 Gew.-%, an ionischen Emulgatoren (S1),
die wässrige Kunststoff-Dispersion enhält mindestens 0,5 Gew.-% an nichtionischen Emulgatoren (S2), und
das Verhältnis der Gesamtmasse an ionischen Komponenten (M3) und (S1) zur eingesetzten Gesamtmenge an nichtionischen Komponenten (M5) und (S2) ist kleiner als 1.

Vorzugsweise enthält die Monomerzusammensetzung A und/oder B noch bis zu 25 Gew.-% mindestens eines monoethylenisch ungesättigten, gegebenenfalls halogen-substituierten Kohlenwasserstoffs mit 2 bis 4 C-Atomen (M2), jeweils bezogen auf die Gesamtmasse der in der Monomerzusammensetzung eingesetzten Monomeren.

Unter dem Begriff Feststoffgehalt wird in der vorliegenden Anmeldung die Gesamtmasse an Copolymerisat, bezogen auf die Gesamtmasse der Dispersion, verstanden.

Der Feststoffgehalt der erfindungsgemäßen Kunststoff-Dispersionen liegt vorzugsweise im Bereich von 20 bis 80 Gew.-%, besonders bevorzugt im Bereich von 40 bis 70 Gew.-% und insbesondere im Bereich von 45 bis 60 Gew.-%.

Die Summe der Anteile der Polymerisate A und B im Vinylester-Copolymerisat beträgt vorzugsweise 75 bis 100 Gew.-%, besonders bevorzugt 80 bis 100 Gew.-% und insbesondere 85 bis 100 Gew.-%, bezogen auf die Gesamtmasse des Copolymerisats.

Das Gewichtsverhältnis von Monomerzusammensetzung A zu Monomerzusammensetzung B entsprechend dem Gewichtsverhältnis von Copolymerisat A zu Homo-oder Copolymerisat B liegt vorzugsweise im Bereich von 90/10 bis 10/90, besonders bevorzugt im Bereich von 80/20 bis 20/80 und insbesondere im Bereich von 70/30 bis 30/70.

Die Größe der Copolymerisat-Partikel der efindungsgemäßen Dispersionen kann in weiten Bereichen variieren. Der mittlere Teilchendurchmesser sollte jedoch vorzugsweise 1000 nm und besonders bevorzugt 600 nm nicht überschreiten. Im Hinblick auf optimale Beschichtungseigenschaften sollten die durchschnittlichen Partikeldurchmesser insbesondere kleiner als 350 nm sein. Im Falle von Bindemittel-Dispersionen mit hohen Feststoffgehalten von mehr als 60 Gew.-%, bezogen auf das Gesamtgewicht der Bindemitteldispersion, ist es jedoch aus Gründen der Viskosität besonders bevorzugt, wenn der mittlere Teilchendurchmesser größer als 140 nm ist.

Die erfindungsgemäßen Kunststoff-Dispersionen weisen vorzugsweise einen pH Wert auf, der im Bereich von 2 bis 9 und besonders bevorzugt im Bereich von 3 bis 7 liegt.

Die Mindestfilmbildetemperatur der erfindungsgemäßen, heterogenen Vinylesters-Dispersionen liegen unterhalb von 20°C. Vorzugsweise liegt die Mindestfilmbildetemperatur unterhalb von 10°C, besonders bevorzugt unterhalb von 5°C und insbesondere unterhalb von 0°C.

Bei den Vinylester-Copolymerisat Partikeln der erfindungsgemäßen Dispersionen handelt es sich im weitesten Sinne um Mehrstufen-Polymerisate mit mindestens einer weichen Polymerphase (d.h. abgeleitet von Monomeren, die ein Homo- oder Copolymer mit einer niedrigen Tg ergeben würden) und mindestens einer harten Polymerphase (d.h. abgeleitet von Monomeren, die ein Homo- oder Copolymer mit einer hohen $T_g$ ergeben würden), die durch mehrstufige Emulsionspolymerisation hergestellt werden, wobei die Polymerisation der nachfolgenden Stufe(n) in Gegenwart der zuvor gebildeten Polymerisationsstufe(n) erfolgt. Besonders bevorzugt handelt es sich bei den mehrstufigen Polymerisations-prozessen, durch die sich die erfindungsgemäßen Kunststoff-Dispersionen herstellen lassen, um zweistufige Prozesse.

Die Glasübergangstemperaturen der Polymerisate A und B werden der vorliegenden Anmeldung nach der Gleichung von Fox (T.G. Fox, Bull. Am. Ph. Soc. (Ser. 11) 1, 123 [1956] und Ullmann's Enzyklopädie der technischen Chemie, Weinheim (1980), Band 19, S. 1-7-18) berechnet, gemäß der für die Glasübergangstemperatur $T_g$ von Mischpolymerisaten bei großen Molmassen in guter Näherung die Gleichung

$$1/T_g = X^1/T_g^1 + X^2/T_g^2 + \ldots\ldots X^n/T_g^n$$

gilt, wobei $X^1$,$X^2$, .... $X^n$ die Massenbrüche 1,2, .... n und $T_g^1$, $T_g^2$, ... $T_g^n$ die Glasübergangstemperaturen der jeweils nur aus einem der Monomeren 1,2, .... n aufgebauten Polymeren in Grad Kelvin bedeuten. Letztere sind z.B. aus Ullmann's Encyclopedia of Industrial Chemistry, VCH Weinheim, Vol. A 21 (1992) S. 169 oder aus Brandrup, E.H. Immergut Polymer Handbook 3rd ed, J. Wiley, New York 1989 bekannt, wie z.B. die Glasübergangstemperatur des Ethen-Homopolymehsats von 148 K (siehe Brandrup, E.H. Immergut Polymer Handbook 3rd ed, J. Wiley, New York 1989, S. VI/214) und die Glasübergangstemperatur des Vinylacetat Homopolymerisats von 315 K (siehe Ullmann's Encyclopedia of Industrial Chemistry, VCH Weinheim, Vol. A 21 (1992) S. 169). Im Rahmen einer vereinfachten Berechnung der Glasübergangstemperaturen ist es möglich, lediglich die hauptsächlich zur Bildung der Phasen beitragenden Haupt-Monomere (M1) und gegebenenfalls (M2) zu berücksichtigen und die Beiträge weiterer Monomere, die aus Massenbrüchen von weniger als 2 Gew.-% resultieren, zu vernachlässigen, solange die Gesamtsumme der Massenbrüche dieser Monomere 4 Gew.-% nicht überschreitet.

Als Vinylester von Carbonsäuren mit 1 bis 18 Kohlenstoffatomen (M1) können alle dem Fachmann bekannten Monomere eingesetzt werden.

Bevorzugt sind Vinylester von Carbonsäuren mit 1 bis 8 Kohlenstoffatomen, wie zum Beispiel Vinylformiat, Vinylacetat, Vinylpropionat, Vinylisobutyrat, Vinylpivalat und Vinyl-2-ethylhexanoat; Vinylester von gesättigten, verzweigten Monocarbonsäuren mit 9, 10 oder 11 Kohlenstoffatomen im Säurerest (®Versaticsäuren); Vinylester von längerkettigen, gesättigten und ungesättigten Fettsäuren, wie zum Beispiel Vinyllaurat und Vinylstearat; Vinylester der Benzoesäure oder der p-tert.-Butylbenzoesäure sowie Gemische derselben.

Besonders bevorzugt sind Vinylester von Carbonsäuren mit 1 bis 4 Kohlenstoffatomen, Gemische aus Vinylacetat und mindestens einer Versaticsäure sowie Gemische aus Vinylacetat und Vinyllaurat.

Insbesondere bevorzugt ist Vinylacetat.

Beispiele für monoethylenisch ungesättigte, gegebenenfalls halogensubstituierte Kohlenwasserstoffe mit 2 bis 4 Kohlenstoffatomen (M2), im folgenden auch als Monoolefine mit 2 bis 4 Kohlenstoffatomen bezeichnet, sind Ethen, Propen, 1-Buten, 2-Buten, Isobuten, Vinylchlorid und Vinylidenchlorid, wobei Ethen und Gemische aus Ethen und Vinylchlorid bevorzugt sind. Der Anteil an diesen Monomeren (M2) im Vinylester-Copolymerisat beträgt, bezogen auf die Gesamtmasse der zur Herstellung des Vinylester-Copolymerisats verwendeten Monomere, vorzugsweise weniger als 20 Gew.-%.

Bevorzugte Monomergemische aus den Monomeren M1 und M2 zur Herstellung der erfindungsgemäßen Kunststoffdispersionen aus den Copolymerisaten A und B sind Vinylacetat/Vinylchlorid/Ethen, Vinylacetat/Vinyllaurat/Ethen, Vinylacetat/Vinyllaurat/- EthenNinylchlorid, Vinylacetat/Versaticsäurevinylester/Ethen/Vinylchlorid, Versaticsäurevinylester/Ethen/Vinylchlorid, Vinylacetat/Versaticsäurevinylester/- Ethen und Vinylacetat/Ethen, wobei die Kombination Vinylacetat/Ethen besonders bevorzugt ist.

Unter ethylenisch ungesättigten, ionischen Monomeren (M3) werden in der vorliegenden Beschreibung solche ethylenisch ungesättigten Monomere verstanden, die eine Wasserlöslichkeit von mehr als 50 g/l, vorzugsweise mehr als 80 g/l, bei 25°C und 1 bar aufweisen und die in verdünnter wässriger Lösung bei pH 2 und/oder pH 11 zu mehr als 50 %, vorzugsweise mehr als 80 %, als ionische Verbindung vorliegen oder aber bei pH 2 und/oder pH 11 durch Protonierung oder Deprotonierung zu mehr als 50 %, vorzugsweise mehr als 80 %, in eine ionische Verbindung transformiert werden.

Als ethylenisch ungesättigte, ionische Monomere (M3) sind solche Verbindungen geeignet, die mindestens eine Carbonsäure-, eine Sulfonsäure-, eine Phosphorsäureoder eine Phosphonsäuregruppe in direkter Nachbarschaft zur Doppelbindungseinheit tragen oder aber über einen Spacer mit dieser verbunden sind. Als Beispiele seien genannt: $\alpha,\beta$-ungesättigte $C_3$-$C_8$-Monocarbonsäuren, $\alpha,\beta$-ungesättigte $C_5$-$C_8$-Dicarbonsäuren sowie deren Anhydride, und Halbester von $\alpha,\beta$-ungesättigten $C_4$- $C_8$-Dicarbonsäuren.

Bevorzugt sind ungesättigte Monocarbonsäuren, wie z.B. Acrylsäure und Methacrylsäure sowie deren Anhydride; ungesättigte Dicarbonsäuren, wie z. B. Maleinsäure, Fumarsäure, Itaconsäure und Citraconsäure sowie deren Halbester mit $C_1$-$C_{12}$-Alkanolen wie Monomethylmaleinat und Mono-n-butylmaleinat. Weitere bevorzugte, ethylenisch ungesättigte, ionische Monomere (M3) sind ethylenisch ungesättigte Sulfonsäuren, wie z.B. Vinylsulfonsäure, 2-Acrylamido-2-methylpropansulfonsäure, 2-Acryloxy-und 2-Methacryloxyethansulfonsäure, 3-Acryloxy- und 3-Methacryloxypropansulfonsäure und Vinylbenzolsulfonsäure, sowie ethylenisch ungesättigte Phosphonsäuren, wie z.B. Vinylphosphonsäure.

Außerdem können neben den genannten Säuren auch deren Salze eingesetzt werden, vorzugsweise deren Alkalimetallsalze oder deren Ammoniumsalze und insbesondere deren Natiumsalze, wie beispielsweise die Natriumsalze

der Vinylsulfonsäure und der 2-Acrylamidopropansulfonsäure.

Die genannten, ethylenisch ungesättigten, freien Säuren liegen in wässriger Lösung bei pH 11 überwiegend in Form ihrer konjugierten Basen in anionischer Form vor und lassen sich, wie die genannten Salze, als anionische Monomere bezeichnen.

Des Weiteren eignen sich als ethylenisch ungesättigte, ionische Monomere (M3) auch Monomere mit kationischer Funktionalität, wie beispielsweise auf quaternäre Ammoniumgruppen zurückgehende Monomere. Bevorzugt sind jedoch anionische Monomere.

Zumindest eine von den Monomerzusammensetzungen abgeleitete Phase A oder B, vorzugsweise die von der weichen Monomermischung A abgeleitete Phase, ganz besonders bevorzugt beide von der weichen und der harten Monomerzusammensetzung abgeleiteten Phasen A und B der Vinylester-Copolymerisate der erfindungsgemäßen Kunststoff-Dispersion weisen bis zu 10 Gew.-%, vorzugsweise bis zu 5 Gew.-%, insbesondere 0,05 bis 2 Gew.-% und besonders bevorzugt 0,1 bis 1,5 Gew.-%, bezogen auf die Gesamtmasse der jeweiligen Monomerzusammensetzung, mindestens einer ungesättigten, copolymerisierbaren Siliciumorganischen Verbindung (M4), im folgenden auch Silanverbindung genannt, copolymerisiert auf.

Beispiele für die genannten Silicium-organischen Verbindungen sind Monomere der allgemeinen Formel RSi $(CH_3)_{0-2}(OR^1)_{3-1}$, wobei R die Bedeutung $CH_2=CR^2-(CH_2)_{0-1}$ oder $CH_2=CR^2-CO_2-(CH_2)_{1-3}$ hat, $R^1$ ein unverzweigter oder verzweigter, gegebenenfalls substituierter Alkylrest mit 3 bis 12 C-Atomen ist, der gegebenenfalls durch eine Ethergruppe unterbrochen sein kann, und $R^2$ für H oder $CH_3$ steht.

Bevorzugt sind Silicium-organische Verbindungen der Formeln $CH_2=CR^2-(CH_2)_{0-1}-Si(CH_3)_{0-1}(OR^1)_{3-2}$ und $CH_2=CR^2-CO_2(CH_2)_3-Si(CH_3)_{0-1}(OR^1)_{3-2}$, wobei $R^1$ ein verzweigter oder unverzweigter Alkylrest mit 1 bis 8 C-Atomen ist und $R^2$ für H oder $CH_3$ steht.

Besonders bevorzugte Silicium-organische Verbindungen sind Vinylmethyldimethoxy-silan, Vinylmethyldiethoxy-silan, Vinylmethyl-di-n-propoxy-silan, Vinylmethyl-di-iso-propoxy-silan, Vinylmethyl-di-n-butoxy-silan, Vinylmethyl-di-sec.butoxy-silan, Vinylmethyl-di-tert.-butoxy-silan, Vinylmethyl-di-(2-methoxyisopropyloxy)-silan und Vinylmethyl-dioctyloxy-silan.

Insbesondere bevorzugt sind Silicium-organische Verbindungen der Formel $CH_2=CR^2-(CH_2)_{0-1}-Si(OR^1)_3$ und $CH_2=CR^2-CO_2-(CH_2)_3-Si(OR^1)_3$, wobei $R^1$ für einen verzweigten oder unverzweigten Alkylrest mit 1 bis 4 C-Atomen und $R^2$ für H oder $CH_3$ steht.

Beispiele hierfür sind γ-(Meth)acryloxypropyl-tris-(2-methoxyethoxy)-silan, γ -(Meth)acryloxypropyl-tris-methoxy-silan, γ-(Meth)acryloxypropyl-tris-ethoxy-silan, γ-(Meth)acryloxypropyl-tris-n-propoxy-silan, γ-(Meth)acryloxypropyl-tris-iso-propoxy-silan, γ-(Meth)acryloxypropyl-tris-butoxy-silan, γ-Acryloxypropyl-tris-(2-methoxyethoxy)-silan, γ-Acryloxypropyl-tris-methoxy-silan, γ-Acryloxypropyl-tris-ethoxy-silan, γ-Acryloxypropyl-tris-n-propoxy-silan, γ-Acryloxypropyl-tris-iso-propoxysilan, γ-Acryloxypropyl-tris-butoxy-silan, sowie Vinyl-tris-(2-methoxyethoxy)-silan, Vinyl-tris-methoxy-silan, Vinyl-tris-ethoxy-silan, Vinyl-tris-n-propoxy-silan, Vinyl-tris-iso-propoxy-silan und Vinyl-tris-butoxy-silan. Die genannten Silicium-organischen Verbindungen können gegebenenfalls auch in Form ihrer (Teil)hydrolysate eingesetzt werden.

Des weiteren kann das Vinylester-Copolymerisat bis zu 10 Gew.-%, vorzugsweise bis zu 5 Gew.-% an ethylenisch ungesättigten, nichtionischen Monomeren (M5), bezogen auf die Gesamtmasse der in der jeweiligen Monomermischung eingesetzten Monomere, copolymerisiert enthalten. Vorzugsweise liegt der Anteil an diesen Monomeren (M5) jedoch unter 2 Gew.-% und besonders bevorzugt unter 1 Gew.-%.

Unter ethylenisch ungesättigten, nichtionischen Monomeren (M5) werden in der vorliegenden Anmeldung solche ethylenisch ungesättigten Verbindungen verstanden, die eine Wasserlöslichkeit von mehr als 50 g/l, vorzugsweise mehr als 80 g/l, bei 25°C und 1 bar aufweisen und die in verdünnter wässriger Lösung bei pH 2 und pH 11 überwiegend in nichtionischer Form vorliegen.

Als ethylenisch ungesättigte, nichtionische Monomere (M5) bevorzugt sind sowohl die Amide der im Zusammenhang mit den ethylenisch ungesättigten, ionischen Monomeren (M3) genannten Carbonsäuren, wie beispielsweise (Meth)acrylamid und Acrylamid, sowie wasserlösliche N-Vinyllactame, wie beispielsweise N-Vinylpyrrolidon, als auch solche Verbindungen, die als ethylenisch ungesättigte Verbindungen kovalent gebundene Polyethylenglykoleinheiten enthalten, wie beispielsweise Polyethylenglykolmono- oder diallylether oder die Ester ethylenisch ungesättigter Carbonsäuren mit Polyalkylenglykolen.

Darüber hinaus kann das Vinylester-Copolymerisat bis zu 30 Gew.-%, vorzugsweise bis zu 15 Gew.-% und besonders bevorzugt bis zu 10 Gew.-%, mindestens eines weiteren, ethylenisch ungesättigten Monomeren (M6), bezogen auf die Gesamtmasse der in der jeweiligen Monomermischung vorhandenen Monomere, copolymerisiert enthalten.

Bevorzugt als weitere, ethylenisch ungesättigte Monomere (M6) sind insbesondere die Ester ethylenisch ungesättigter $C_3$-$C_8$-Mono- und Dicarbonsäuren mit $C_1$-$C_{18}$, vorzugsweise $C_1$-$C_{12}$- und besonders bevorzugt $C_1$-$C_8$-Alkanolen oder $C_5$-$C_8$-Cycloalkanolen. Geeignete $C_1$-$C_{18}$-Alkanole sind beispielsweise Methanol, Ethanol, n-Propanol, i-Propanol, 1-Butanol, 2-Butanol, i-Butanol, tert.-Butanol, n-Hexanol, 2-Ethylhexanol, Laurylalkohol und Stearylalkohol.

Geeignete Cycloalkanole sind beispielsweise Cyclopentanol und Cyclohexanol. Besonders bevorzugt sind die Ester der Acrylsäure, der Methacrylsäure, der Crotonsäure, der Maleinsäure, der Itaconsäure, der Citraconsäure und der Fumarsäure. Insbesondere bevorzugt sind die Ester der Acrylsäure und/oder der Methacrylsäure, wie z.B. der (Meth)acrylsäuremethylester, der (Meth)acrylsäureethylester, der (Meth)acrylsäureisopropylester, der (Meth)acrylsäure-n-butylester, der (Meth)äcrylsäureisobutylester, der (Meth)acrylsäure-1-hexylester, der (Meth)acrylsäure-tert.-butylester, der (Meth)acrylsäure-2-ethylhexylester, sowie die Ester der Fumarsäure und der Maleinsäure, wie z.B. der Fumarsäuredimethylester, der Maleinsäuredimethylester, der Maleinsäuredi-n-butylester, der Maleinsäuredi-n-octylester und oder Maleinsäuredi-2-ethylhexylester. Gegebenenfalls können die genannten Ester auch mit Epoxy- und/oder Hydroxylgruppen substituiert sein. Weiterhin kommen als ethylenisch ungesättigte Monomere (M6) Nitrile $\alpha,\beta$-monoethylenisch ungesättigter $C_3$-$C_8$-Carbonsäuren, wie z.B. Acrylnitril und Methacrylnitril, in Frage. Auch können $C_4$-$C_8$-konjugierte Diene, wie z.B. 1,3-Butadien, Isopren und Chloropren als Monomere (M6) eingesetzt werden.

Eine partielle Substitution des Vinylesters mit den genannten Verbindungen wird in der Regel durchgeführt, um die Eigenschaften der Homo- oder Copolymerisate A und/oder B, wie z.B. die Hydrophobie/Hydrophilie, einzustellen.

Des Weiteren können als weitere, ethylenisch ungesättigte Monomere (M6) solche Verbindungen eingesetzt werden, die bekanntermaßen die Haftungseigenschaften verbessern und/oder als Vernetzer wirken.

Zu den haftungsverbessemden Monomeren gehören sowohl Verbindungen, die eine an das Doppelbindungssystem kovalent gebundene Acetoacetoxy-Einheit aufweisen, als auch Verbindungen mit kovalent gebundenen Harnstoffgruppen. Zu den erstgenannten Verbindungen zählen insbesondere Acetoacetoxyethyl(meth)acrylat und Acetessigsäureallylester. Zu den harnstoffgruppenhaltigen Verbindungen gehören zum Beispiel N-Vinyl- und N-Allyl-Harnstoff sowie Derivate des Imidazolidin-2-ons, wie z.B. N-Vinyl- und N-Allyl-imidazolidin-2-on, N-Vinyloxyethylimidazolidin-2-on, N-(2-(Meth)acrylamidoethyl)imidazolidin-2-on, N-(2-(Meth)acryloxyethyl)-imidazolidin-2-on und N-(2- (Meth)acryloxy-acetamidoethyl)imidazolidin-2-on, sowie weitere dem Fachmann bekannte Haftungsvermittler auf Basis von Harnstoff bzw. Imidazolidin-2-on. Zur Verbesserung der Haftung eignet sich auch Diacetonacrylamid in Kombination mit einer Nachgabe von Adipinsäuredihydrazid zur Dispersion. Die haftungsvermittelnden Monomere können gegebenenfalls in Mengen von 0,1 bis 10 Gew.-%, vorzugsweise von 0,5 bis 5 Gew-%, bezogen auf die Gesamtmasse der in der jeweiligen Monomermischung verwendeten Monomere, eingesetzt werden. In einer bevorzugten Ausführungsform enthalten die Polymerisate A und B jedoch keines dieser haftungsvermittelnden Monomere copolymerisiert.

Als vernetzende Monomere können sowohl bifunktionelle als auch polyfunktionelle Monomere eingesetzt werden. Beispiele hierfür sind Diallylphthalat, Diallylmaleinat, Triallylcyanurat, Tetraallyloxyethan, Divinylbenzol, Butandiol-1,4-di(meth)acrylat, Triethylenglykoldi(meth)acrylat, Divinyladipat, Allyl(meth)acrylat, Vinylcrotonat, Methylenbisacrylamid, Hexandioldiacrylat, Pentaerythroldiacrylat und Trimethylolpropantriacrylat. Die vernetzenden Monomere können gegebenenfalls in Mengen von 0,02 bis 5 Gew.-%, vorzugsweise von 0,02 bis 1 Gew.-%, bezogen auf die Gesamtmasse der in der jeweiligen Monomermischung verwendeten Monomere, eingesetzt werden. In einer bevorzugten Ausführungsform enthalten die Polymerisate A und B jedoch keines dieser vernetzenden Monomere copolymerisiert.

Neben dem Vinylester-Copolymerisat enthält die erfindungsgemäße, wässrige Kunststoff-Dispersion 0 bis 3 Gew.-%, vorzugsweise 0,1 bis 3 Gew.-%, besonders bevorzugt 0,5 bis 2 Gew.-%, bezogen auf die Gesamtmasse der zur Herstellung des Vinylester-Copolymerisats verwendeten Monomere, an ionischen Emulgatoren (S1). Zu den ionischen Emulgatoren zählen sowohl anionische als auch kationische Emulgatoren, wobei anionische Emulgatoren sowie Mischungen von anionischen Emulgatoren besonders bevorzugt sind.

Zu den anionischen Emulgatoren zählen Alkali- und Ammoniumsalze von Alkylsulfaten (Alkylrest: $C_6$ bis $C_{18}$), Alkylphosphonaten (Alkylrest: $C_6$ bis $C_{18}$), von Schwefelsäurehalbestern oder Phosphorsäuremono- und -diestern ethoxylierter Alkanole (EO-Grad: 2 bis 50, Alkylrest: $C_6$ bis $C_{22}$) und ethoxylierter Alkylphenole (EO-grad: 3 bis 50, Alkylrest: $C_4$ bis $C_9$), von Alkylsulfonsäuren (Alkylrest: $C_{12}$ bis $C_{18}$), von Alkylarylsulfonsäuren (Alkylrest: $C_9$ bis $C_{18}$), von Sulfobemsteinsäurehalbestern und Sulfobemsteinsäurediestem von Alkanolen (Alkylrest: $C_6$ bis $C_{22}$) und ethoxylierten Alkanolen (EO-Grad: 2 bis 50, Alkylrest: $C_6$ bis $C_{22}$), sowie nichtethoxylierter und ethoxylierter Alkylphenole (EO-grad: 3 bis 50, Alkylrest: $C_4$ bis $C_9$).

In der Regel werden die aufgeführten Emulgatoren als technische. Gemische eingesetzt, wobei sich die Angaben zu Länge von Alkylrest und EO-Kette auf das jeweilige Maximum der in den Mischungen vorkommenden Verteilungen bezieht. Beispiele aus den genannten Emulgatorklassen sind ®Texapon K12 (Natriumlaurylsulfat von Cognis), ®Emulsogen EP ($C_{13}$-$C_{17}$ Alkylsulfonat von Clariant), ®Maranil A 25 IS (Natrium-n-Alkyl-($C_{10}$-$C_{13}$) benzolsulfonat von Cognis), ®Genapol liquid ZRO (Natrium $C_{12}$/$C_{14}$-Alkylethersulfat mit 3 EO-Einheiten von Clariant), ®Hostapal BVQ-4 (Natriumsalz eines Nonylphenolethersulfats mit 4 EO-Einheiten von Clariant), ®Aerosol MA 80 (Natriumdihexylsulfosuccinat von Cyctec Industries), ®Aerosol A-268 (Dinatriumisodecylsulfosuccinat von Cytec Industries), ®Aerosol A-103 (Dinatriumsalz eines Halbesters der Sulfobernsteinsäure mit einem ethoxylierten Nonylphenol von Cytec Industries).

Weiterhin eignen sich Verbindungen der allgemeinen Formel 1,

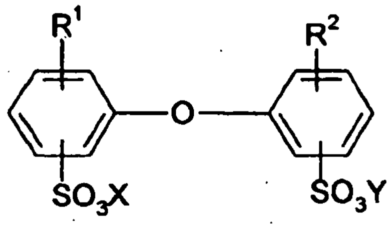

worin $R^1$ und $R^2$ Wasserstoff oder $C_4$-$C_{24}$-Alkyl, vorzugsweise $C_6$-$C_{16}$-Alkyl bedeuten und nicht gleichzeitig Wasserstoff sind, und X und Y Alkalimetallionen und/oder Ammoniumionen sind. Häufig werden auch im Falle dieser Emulgatoren technische Gemische verwendet, die einen Anteil von 50 bis 90 Gew.-% des monoalkylierten Produktes aufweisen, beispielsweise Dowfax® 2A1 ($R^1$ = $C_{12}$-Alkyl; DOW Chemical). Die Verbindungen sind allgemein bekannt, z.B. aus der US-A-4,269 749, und im Handel erhältlich.

Darüber hinaus eignen sich als ionische Emulgatoren auch besonders dem Fachmann bekannten Gemini-Tenside, wie sie beispielsweise in dem Aufsatz "Gemini-Tenside" von F.M. Menger und J. S. Keiper (Angew. Chem. 2000, S. 1980-1996) und den darin zitierten Publikationen beschrieben sind.

Zu den kationischen Emulgatoren zählen beispielsweise Alkylammoniumacetate (Alkylrest: $C_8$ bis $C_{12}$), quartäre, ammoniumgruppenhaltige Verbindungen und Pyridiniumverbindungen.

Selbstverständlich ist bei der Wahl der ionischen Emulgatoren darauf zu achten, dass Unverträglichkeiten in der resultierenden Kunststoff-Dispersion, die bis zur Koagulation führen können, auszuschließen sind. Deshalb werden bevorzugt anionische Emulgatoren in Kombination mit anionischen Monomeren (M3) oder kationische Emulgatoren in Kombination mit kationischen Monomeren (M3) eingesetzt, wobei die Kombinationen aus anionischen Emulgatoren und anionischen Monomeren besonders bevorzugt sind.

Neben den optional vorhandenen ionischen Emulgatoren enthält die erfindungsgemäße, wässrige Kunststoff-Dispersion mindestens 0.5 Gew.-% an nichtionischen Emulgatoren (S2). Diese liegen typischerweise in Mengen bis zu 10 Gew. %, vorzugsweise von 0,5 bis 5 Gew. %, bezogen auf die Gesamtmasse der eingesetzten Monomeren, vor.

Dabei ist das Verhältnis der Gesamtmasse an ionischen Komponenten (M3) und (S1) zur eingesetzten Gesamtmenge an nichtionischen Komponenten (M5) und (S2) so zu wählen, dass dieses kleiner als 1 ist. Besonders bevorzugt enthält die erfindungsgemäße Kunststoff-Dispersion als nichtionische Komponenten nur nichtionische Emulgatoren (S2) und keine von ethylenisch ungesättigten, nichtionischen Monomeren abgeleiteten Struktureinheiten.

Geeignete nichtionische Emulgatoren (S2) sind araliphatische und aliphatische nichtionische Emulgatoren, beispielsweise ethoxylierte Mono-, Di- und Trialkylphenole (EO-Grad: 3 bis 50, Alkylrest $C_4$ bis $C_9$), Ethoxylate langkettiger, verzweigter oder unverzweigter Alkohole (EO-Grad: 3 bis 50, Alkylrest: $C_6$ bis $C_{36}$) sowie Polyethylenoxid/Polypropylenoxid-Blockcopolymere.

Bevorzugt werden Ethoxylate langkettiger, verzweigter oder unverzweigter Alkanole (Alkylrest: $C_6$ bis $C_{22}$, mittlerer Ethoxylierungsgrad: 3 bis 50), und darunter besonders bevorzugt solche auf Basis von nativen Alkoholen, Guerbet-Alkoholen oder Oxoalkoholen mit einem linearen oder verzweigten $C_{12}$-$C_{18}$ Alkylrest und einem Ethoxylierungsgrad E0 von 8 bis 50, eingesetzt.

Weitere geeignete Emulgatoren finden sich in Houben-Weyl, Methoden der organischen Chemie, Band XIV/I, Makromolekulare Stoffe, Georo-Thieme Verlag, Stuttgart, 1961, S. 192-208).

Darüber hinaus können sowohl ionische wie auch nichtionische Emulgatoren verwendet werden, die als zusätzliche Funktionalität eine oder mehrere ungesättigte Doppelbindungseinheiten enthalten und als ethylenisch ungesättigte, ionischen Monomere (M3) bzw. als ethylenisch ungesättigte, nichtionische Monomere (M5) während des Polymerisationsprozesses in die entstehenden Polymerketten eingebaut werden können. Diese als copolymerisierbare Emulgatoren ("Surfmers") bezeichnete Verbindungen sind dem Fachmann allgemein bekannt. Beispiele finden sich in einer Reihe von Veröffentlichungen (z. B.: Reactive surfactants in heterophase polymerization" von A. Guyot et al. in Acta Polym. 1999, S. 57-66) und sind im Handel erhältlich (z.B. ®Emulsogen R 208 von Clariant oder Trem LF 40 von Cognis).

Darüber hinaus beträgt die Gesamtmasse an ionischen Emulgatoren (S1) und ethylenisch ungesättigten, ionischen Monomeren (M3), die zur Stabilisierung der Kunststoff-Dispersion eingesetzt werden, maximal 3 Gew.-%, vorzugsweise maximal 1 Gew.-%, bezogen auf die Gesamtmasse des Vinylester-Copolymerisats.

Neben ionischen stabilisierenden Komponenten enthält die erfindungsgemäße Kunststoff-Dispersion nichtionische stabilisierende Komponenten.

Die Gesamtmasse an nichtionischen Emulgatoren (S2) und ethylenisch ungesättigten, nichtionischen Monomeren (M5), die zur Stabilisierung der Kunststoff-Dispersion eingesetzt werden, beträgt maximal 10 Gew.-%, vorzugsweise maximal 5 Gew.-%, bezogen auf die Gesamtmasse des Vinylester-Copolymerisats.

Besonders bevorzugt beträgt das Verhältnis der Gesamtmenge an ionischen Komponenten (M3) und (S1) zur

eingesetzten Gesamtmenge an nichtionischen Komponenten (M5) und (S2) 0,0 bis 0,9.

In einer weiteren bevorzugten Ausführungsform enthält die erfindungsgemäße Kunststoff-Dispersion Schutzkolloide, vorzugsweise Polyvinylalkohole, Stärke- und Cellulosederivate sowie Vinylpyrrolidon.

Ganz besonders bevorzugt werden Polyvinylalkohole eingesetzt.

Der Anteil dieser Komponenten an der Gesamtmasse der Kunststoff-Dispersion beträgt üblicherweise nicht mehr als 10 Gew.-%, vorzugsweise nicht mehr als 5 Gew.-%.

Gegenstand der vorliegenden Erfindung sind auch Verfahren zur Herstellung der erfindungsgemäßen, wässrigen Kunststoff-Dispersionen auf Basis von Vinylester-Copolymerisaten.

Die Erfindung betrifft daher auch ein Verfahren zur Herstellung einer Kunststoff-Dispersion durch wässrige, radikalische Emulsionspolymerisation eines Monomers oder einer Mischung von Monomereh. B, indem zunächst ein Homo- oder Copölymerisat B hergestellt wird und anschließend in der wässrigen Dispersion des Homo- oder Copolymerisats B durch radikalische Emulsionspolymerisation eines Monomers oder einer Monomermischung A das Homo- oder Copolymerisat A hergestellt wird, wobei die radikalische Emulsionspolymerisation in Gegenwart von nichtionischen Emulgatoren (S2) und gegebenenfalls in Gegenwart von ethylenisch ungesättigten, ionischen Monomeren (M3) und/oder ionischen Emulgatoren (S1) durchgeführt wird, so dass die Gesamtmasse an nichtionischen Emulgatoren (S2) im Endprodukt mindestens 0,5 Gew.-% beträgt, und das Verhältnis der Gesamtmasse an ionischen Komponenten (M3) und (S1) zur eingesetzten Gesamtmenge an nichtionischen Komponenten (M5) und (S2) im Endprodukt kleiner als 1 beträgt, mit der Maßgabe, dass die Herstellung des Homo- oder Copolymerisats B auch nach der Herstellung des Homo- oder Copolymerisats A erfolgen kann.

Die Herstellung erfolgt durch eine sogenannte Stufenpolymerisation, Darunter wird allgemein eine Vorgehensweise verstanden, bei der man in einer 1. Stufe die Monomere der 1. Stufe auf dem Wege einer radikalischen, wässrigen Emulsionspolymerisation, vorzugsweise in Gegenwart eines Saatlatex, der vorzugsweise in situ hergestellt wird, polymerisiert und anschließend in der wässrigen Dispersion des so erhaltenen Polymerisats der 1. Stufe die Monomere der 2. Stufe polymerisiert. Gegebenenfalls können weitere Polymerisationsstufen folgen. Dabei unterscheiden sich die Comonomere der 1. und 2. Stufe hinsichtlich der Art der Monomere und/oder in Bezug auf die relativen Mengen der Monomere zueinander. Vorzugsweise ist die Art der zu polymerisierenden Monomere für beide Stufen gleich. Es bestehen dann lediglich Unterschiede hinsichtlich der relativen Mengen der Monomere zueinander.

Im allgemeinen wird bei der Wahl der Monomerzusammensetzung der einzelnen Stufen so vorgegangen, dass in einer ersten Stufe eine Monomerzusammensetzung B gewählt wird, die zur Bildung des Homo- oder Copolymerisats B führt und in einer weiteren Stufe, vorzugsweise der zweiten Stufe, ein entsprechendes Monomer oder Monomergemisch A polymerisiert wird, die zur Bildung des Homo- oder Copolymerisats A führt.

Es kann jedoch auch in umgekehrter Weise verfahren werden und das Homo- oder Copolymerisat B in Gegenwart des zuvor hergestellten Homo-oder Copolymerisats A und gegebenenfalls weiterer Stufen erzeugt werden.

Die mittels der Stufenpolymerisation hergestellten Vinylester-Copolymerisate umfassen dabei unabhängig von der nachweisbaren Morphologie alle Copolymerisate, bei denen die Polymerisat-Komponenten A und B durch aufeinanderfolgende Stufen der Emulsionspolymerisation erzeugt worden sind.

Die Monomerenzusammensetzung A zur Erzeugung des Homo- oder Copolymerisats A enthält, bezogen auf die Gesamtmenge der in der Monomerzusammensetzung A eingesetzten Monomeren, mehr als 50 Gew.-%, vorzugsweise mehr als 70 Gew.-%, besonders bevorzugt mehr als 80 Gew.-%, und insbesondere 80 bis 95 Gew.-% an Monomeren (M1), weniger als 25 Gew.-%, vorzugsweise 5 bis 20 Gew.-% und besonders bevorzugt 10 bis 15 Gew.-% an Monoolefinen mit 2 bis 4 C-Atomen (M2), 0 bis 10 Gew.-%, vorzugsweise 0,05 bis 5 Gew. % mindestens einer ungesättigten, copolymerisierbaren Silicium-organischen Verbindung (M4), und vorzugsweise bis zu 1 Gew.-% an ionischen Monomeren (M3), wobei die Zusammensetzung der Monomerenmischung so gewählt wird, dass ein mit dieser Monomerenmischung separat polymerisiertes Copolymerisat eine Glasübergangstemperatur im Bereich 0 bis 20°C, vorzugsweise im Bereich von 0 bis 15°C und besonders bevorzugt im Bereich von 0 bis 10°C aufweist.

Die Monomerenzusammensetzung zur Erzeugung des Homo- oder Copolymerisats B enthält, bezogen auf die Gesamtmenge der zur Herstellung des Homo- oder Copolymerisats B eingesetzten Monomere, mehr als 50 Gew.-%, vorzugsweise mehr als 70 Gew.-%, besonders bevorzugt mehr als 80 Gew.-% und insbesondere 90 bis 98 Gew.-% an Monomeren (M1), sowie weniger als 25 Gew.-%, vorzugsweise weniger als 20 Gew.-%, besonders bevorzugt 0,1 bis 10 Gew.-%, und insbesondere 0,1 bis 5 Gew. % an Monoolefinen mit 2 bis 4 C-Atomen (M2), sowie 0 bis 10 Gew.-%, vorzugsweise 0,05 bis 5 Gew. % mindestens einer ungesättigten, copolymerisierbaren Silicium-organischen Verbindung (M4), und vorzugsweise bis zu 1 Gew.-% an ionischen Monomeren (M3), wobei die Zusammensetzung der Monomeren-(mischung) B so gewählt wird, dass ein mit dieser Monomerenmischung separat polymerisiertes Homo- oder Copolymerisat eine Glasübergangstemperatur im Bereich 20 bis 50°C, vorzugsweise im Bereich von 25 bis 45°C und besonders bevorzugt im Bereich von 30 bis 43°C aufweist.

Darüber hinaus ist bei der Wahl der Monomerzusammensetzungen der beiden Polymerisate A und B des heterogenen Vinylester-Copolymerisats darauf zu achten, dass sich deren Glasübergangstemperaturen um mehr als 10 K, vorzugsweise um mehr als 15 K und besonders bevorzugt um mehr als 20 K unterscheiden.

Bei der Wahl der Monomerzusammensetzungen werden besonders bevorzugt, bezogen auf die Gesamtmenge der zur Herstellung des Copolymerisats eingesetzten Monomere, weniger als 20 Gew.-%, vorzugsweise 0,1 bis 20 Gew.-% und besonders bevorzugt 0,1 bis 15 Gew.-%, an ethylenisch ungesättigten Monoolefinen mit 2 bis 4 Kohlenstoffatomen (M2) eingesetzt.

In besonderen Ausführungsformen kann es notwendig sein, durch die unterschiedlichen Anteile an Monoolefinen (M2), die unter den Reaktionsbedingungen im gasförmigen Aggregatzustand vorliegen, die einzelnen Polymerisationsstufen bei unterschiedlichen Polymerisationsdrucken durchzuführen. In diesen Fällen beträgt der Druck, der durch das Dosieren der gasförmigen Monomerkomponenten (M2) erzeugt wird, während der Polymerisation der zu Copolymerisat B führenden Monomerzusammensetzung vorzugsweise zwischen 0 und 10 bar, besonders bevorzugt zwischen 2 und 10 bar und während der Polymerisation der zu Copolymerisat A führenden Monomer-Zusammensetzung vorzugsweise zwischen 10 und 120 bar, besonders bevorzugt zwischen 20 und 60 bar.

Überraschenderweise wurde dabei gefunden, dass zur Herstellung der Vinylester-Copolymerisate, wobei Copolymerisat A in Gegenwart von Copolymerisat B erzeugt wird, eine Polymerisation der einzelnen Stufen bis zu Monomergehalten <0,3 %, wie sie üblicherweise zur Generierung getrennter Polymerphasen durchgeführt wird, nicht notwendig ist.

In einer besonders bevorzugten Ausführungsform ist es deshalb ausreichend, wenn nach Erzeugung des Copolymerisats B zur Generierung des Copolymerisats A, die Konzentration der Monomerkomponente(n) M2, die unter den Reaktionsbedingungen gasförmig vorliegen, bei kontinuierlicher Dosierung flüssiger Monomerkomponenten, über ein angemessenes Zeitintervall sukzessive erhöht wird (Druckerhöhung). Dieses Verfahren zeichnet sich gegenüber den üblicherweise angewendeten Verfahren durch deutlich reduzierte Reaktorbelegzeiten aus.

Die Polymerisation wird im allgemeinen bei Temperaturen im Bereich von 20 bis 120°C, vorzugsweise im Bereich von 40 bis 95°C und besonders bevorzugt im Bereich von 50 bis 90°C durchgeführt.

Die Herstellung der erfindungsgemäßen, wässrigen Kunststoff-Dispersionen auf Basis von Vinylester-Copolymerisaten erfolgt vorzugsweise durch radikalische, wässrige Emulsionspolymerisation der genannten Monomere in Gegenwart mindestens eines radikalischen Polymerisationsinitiators und mindestens einer grenzflächenaktiven Substanz.

Als radikalische Polymerisationsinitiatoren kommen alle bekannten Initiatoren in Betracht, die in der Lage sind, eine radikalische, wässrige Emulsionspolymerisation zu starten. Es kann sich dabei sowohl um Peroxide, wie z.B. Alkalimetallperoxodisulfate als auch um Azoverbindungen handeln. Als Polymerisationsinitiatoren können auch sogenannte Redoxinitiatoren verwendet werden, die aus mindestens einem organischen und/oder anorganischen Reduktionsmittel und mindestens einem Peroxid und/oder Hydroperoxid zusammengesetzt sind, wie z.B. tert.-Butyl Hydroperoxid mit Schwefelverbindungen, wie z.B. dem Natriumsalz der Hydroxymethansulfinsäure, Natriumsulfit, Natriumdisulfit, Natriumthiosulfat und Acetonbisulfitaddukt, oder Wasserstoffperoxid mit Ascorbinsäure. Auch können kombinierte Systeme verwendet werden, die eine geringe Menge einer im Polymehsationsmedium löslichen Metallverbindung enthalten, deren metallische Komponente in mehreren Wertigkeitsstufen auftreten kann, wie z.B. Ascorbinsäure/Eisensulfat / Wasserstoff-peroxid, wobei an Stelle von Ascorbinsäure auch häufig das Natriumsalz der Hydroxymethansulfinsäure, Acetonbisulfitaddukt, Natriumsulfit, Natriumhydrogensulfit oder Natriumbisulfit und an Stelle von Wasserstoffperoxid organische Peroxide wie z.B. tert. Butylhydroperoxid oder Alkaliperoxodisulfate und/oder Ammoniumperoxodi-sulfat verwendet werden. Anstelle des genannten Acetonbisulfitaddukts können auch weitere dem Fachmann bekannte Bisulfitaddukte eingesetzt werden, wie sie beispielsweise in der EP-A-0 778 290 und in den darin zitierten Literaturstellen beschrieben sind. Weitere bevorzugte Initiatoren sind Peroxodisulfate, wie z.B. Natriumperoxodisulfat. Vorzugsweise beträgt die Menge der eingesetzten, radikalischen Initiatorsysteme, bezogen auf die Gesamtmenge der zu polymerisierenden Monomeren, 0,05 bis 2,0 Gew.-%.

Als grenzflächenaktive Substanzen werden bei der Emulsionspolymerisation üblicherweise Schutzkolloide und die oben beschriebenen ionischen sowie nichtionischen Emulgatoren S1 und S2 eingesetzt, deren relative Molekulargewichte im Unterschied zu den Schutzkolloiden unter 2000 g/mol liegen.

Die grenzflächenaktiven Substanzen werden üblicherweise in Mengen von bis zu 10 Gew.-%, vorzugsweise von 0,5 bis 7 Gew.-% und besonders bevorzugt von 1 bis 6 Gew.-%, bezogen auf die zu polymerisierenden Monomere, eingesetzt.

In einer bevorzugten Ausführungsform des erfindungsgemäßen Verfahrens erfolgt die Emulsionspolymerisation in Gegenwart von Schutzkolloiden, beispielsweise von Polyvinylalkoholen, Stärke- und Cellulosederivaten sowie Vinylpyrrolidon, wobei Polyvinylalkohole und Cellulosederivate, wie z.B. Hydroxyethylcellulosen, bevorzugt sind.

Eine ausführliche Beschreibung weiterer, geeigneter Schutzkolloide findet sich in Houben-Weyl, Methoden der organischen Chemie, Band XIV/I, Makromolekulare Stoffe, Georg Thieme Verlag, Stuttgart 1961, S. 411 bis 420.

Das Molekulargewicht der Vinylester-Copolymerisate kann durch Zugabe gering Mengen einer oder mehrerer das Molekulargewicht regelnder Substanzen eingestellt werden. Diese sogenannten Regler" werden im allgemeinen in einer Menge von bis zu 2 Gew.-%, bezogen auf die zu polymerisierenden Monomere, eingesetzt. Als "Regler" können alle dem Fachmann bekannten Substanzen eingesetzt werden.

Bevorzugt sind z.B. organische Thioverbindungen, Silane, Allylalkohole und Aldehyde.

Die Emulsionspolymerisation erfolgt üblicherweise nach der Batchfahrweise, vorzugsweise nach einem halbkontinuierlichen Verfahren. Bei halbkontinuierlichen Verfahren wird die Hauptmenge, d.h. mindestens 70 %, vorzugsweise mindester 90%, der zu polymerisierenden Monomere kontinuierlich, einschließlich Stufen-Gradientenfahrweise, dem Polymerisationsansatz zugeführt. Diese Vorgehensweise wird auch als Monomerzulaufverfahren bezeichnet, wobei man unter Monomerzulauf das Zudosieren gasförmiger Monomerer, flüssiger Monomermischungen, Monomerlösungen oder insbesondere wässriger Monomeremulsionen versteht. Dabei kann die Dosierung der einzelnen Monomere durch separate Zuläufe erfolgen.

Neben der saatfreien Herstellungsweise kann zur Einstellung einer definierten Polymerteilchengröße die Emulsionspolymerisation auch nach dem Saatlatex-Verfahren oder in Gegenwart von in situ hergestellten Saatlatices erfolgen. Solche Verfahren sind bekannt und werden in einer Vielzahl von Patentanmeldungen (z.B. EP-A-0 040 419 und EP-A-0 567 812) und Publikationen ("Encyclopedia of Polymer Science and Technology", Vol. 5, John Wiley & Sons Inc., New York 1966, S. 847) ausführlich beschrieben.

Im Anschluss an die eigentliche Polymerisationsreaktion kann es wünschenswert und/oder erforderlich sein, die erfindungsgemäßen, wässrigen Kunststoff Dispersionen weitgehend frei von Geruchsträgern, wie z.B. Restmonomeren und anderen flüchtigen, organischen Bestandteilen zu gestalten. Dies kann in an sich bekannter Weise beispielsweise physikalisch durch destillative Entfernung (insbesondere über Wasserdampfdestillation) oder durch Abstreifen mit einem inerten Gas erreicht werden. Ferner kann die Absenkung der Restmonomere auch chemisch durch radikalische Nachpolymerisation, insbesondere durch Einwirkung von Redoxinitiatorsystemen, wie sie z.B. in der DE-A-44 35 423 beschrieben sind, erfolgen. Bevorzugt ist eine Nachpolymerisation mit einem Redoxinitiatorsystem aus mindestens einem organischen Peroxid sowie einem organischen und/oder anorganischen Sulfit. Besonders bevorzugt ist eine Kombination aus physikalischen und chemischen Methoden, wobei nach einer Absenkung des Restmonomer Gehaltes durch chemische Nachpolymerisation die weitere Absenkung des Restmonomer-Gehaltes mittels physikalischer Methoden auf vorzugsweise < 1000 ppm, besonders bevorzugt <500 ppm, insbesondere <100 ppm erfolgt.

Die erfindungsgemäßen wässrigen Kunststoff-Dispersionen auf Basis von Vinylester-Copolymerisaten werden beispielsweise als Bindemittel in pigmenthaltigen, wässrigen Zubereitungen eingesetzt, die zur Beschichtung von Substraten dienen. Hierunter fallen beispielsweise kunstharzgebundene Putze, Fliesenkleber, Anstrichmittel, wie z.B. Dispersionsfarben, Dispersionslacke und Lasuren, Dichtmassen und Versiegelungsmassen, vorzugsweise für poröse Bauteile, aber auch Papierstreichmassen.

Die wässrigen Kunststoff-Dispersionen können aber auch direkt oder nach Zusatz rheologiemodifizierender Additive und/oder weiterer Komponenten als wässrige Zubereitungen zur Beschichtung von Substraten eingesetzt werden. Solche wässrige Zubereitungen sind beispielsweise Grundierungen, Klarlacke oder auch Lebensmittelbeschichtungen, die Lebensmittel, wie z.B. Käse oder fleischhaltige Zubereitungen, vor schädlichen Umwelteinflüssen und/oder Austrocknung schützen.

Ein weiterer Gegenstand der vorliegenden Erfindung sind somit wässrige Zubereitungen enthaltend die erfindungsgemäße wässrige Kunststoff-Dispersion auf Basis von Vinylester-Copolymerisaten. Eine bevorzugte Ausführungsform der wässrigen Zubereitungen sind pigmenthaltige, wässrige Zubereitungen.

Diese bevorzugten, pigmenthaltigen Zubereitungen, besonders bevorzugt Dispersionsfarben, enthalten im allgemeinen 30 bis 75 Gew.-%, vorzugsweise 40 bis 65 Gew.-%, nichtflüchtige Bestandteile. Hierunter sind alle Bestandteile der Zubereitung außer Wasser zu verstehen, zumindest aber die Gesamtmenge an festem Bindemittel, Füllstoff, Pigment, Weichmacher und polymerem Hilfsmittel.

Von den nichtflüchtigen Bestandteile entfallen dabei vorzugsweise

a) 3 bis 90 Gew.-%, besonders bevorzugt 10 bis 60 Gew.-%, auf das feste Bindemittel, d.h. das Vinylester-Copolymerisat
b) 5 bis 85 Gew.-%, besonders bevorzugt 10 bis 60 Gew.-%, auf mindestens ein anorganisches Pigment,
c) 0 bis 85 Gew.-%, besonders bevorzugt 20 bis 70 Gew.-%, auf anorganische Füllstoffe und
d) 0,1 bis 40 Gew.-%, besonders bevorzugt 0,5 bis 15 Gew.-%, auf übliche Hilfsmittel.

Besonders bevorzugt sind lösemittel- und weichmacherfreie, wässrige Zubereitungen.

Die Pigment-Volumen-Konzentration (PVK) der erfindungsgemäßen, pigmenthaltigen, wässrigen Zubereitungen liegt im allgemeinen oberhalb von 5 %, vorzugsweise im Bereich von 10 bis 90 %. In besonders bevorzugten Ausführungsformen liegen die PVKs entweder im Bereich von 10 bis 45 % oder im Bereich von 60 bis 90 %, insbesondere 70 bis 90 %.

Als Pigmente können alle dem Fachmann für den genannten Einsatzzweck bekannten Pigmente verwendet werden. Bevorzugte Pigmente für die erfindungsgemäßen, wässrigen Zubereitungen, vorzugsweise für Dispersionsfarben, sind beispielsweise Titandioxid, vorzugsweise in der Rutilform, Bariumsulfat, Zinkoxid, Zinksulfid, basisches Bleicarbonat, Antimontrioxid und Lithopone (Zinksulfid und Bariumsulfat). Die wässrigen Zubereitungen können jedoch auch

farbige Pigmente, beispielsweise Eisenoxide, Ruß, Graphit, lumineszente Pigmente, Zinkgelb, Zinkgrün, Ultramarin, Manganschwarz, Antimonschwarz, Manganviolett, Pariser Blau oder Schweinfurter Grün enthalten. Neben den anorganischen Pigmenten können die erfindungsgemäßen Zubereitungen auch organische Farbpigmente, beispielsweise Sepia, Gummigutt, Kasseler Braun, Toluidinrot, Pararot, Hansagelb, Indigo, Azofarbstoffe, Anthrachinoide und Indigoide Farbstoffe sowie Dioxazin, Chinacridon-, Phthalocyanin-, IsoIndolinon- und Metallkomplexpigmente enthalten.

Als Füllstoffe können alle dem Fachmann für den genannten Einsatzzweck bekannten Füllstoffe verwendet werden. Bevorzugte Füllstoffe sind Alumosilicate, wie z.B. Feldspate, Silicate, wie z.B. Kaolin, Talkum, Glimmer, Magnesit, Erdalkalicarbonate, wie z.B. Calciumcarbonat, beispielsweise in Form von Calcit oder Kreide, Magnesiumcarbonat. Dolomit, Erdalkalisulfate, wie z.B. Calciumsulfat, und Siliciumdioxid. Die Füllstoffe können entweder als Einzelkomponenten oder als Füllstoffmischungen eingesetzt werden. In der Praxis bevorzugt sind Füllstoffmischungen wie z.B. Calciumcarbonat/Kaolin und Calciumcarbonat/Talkum Kunstharzgebundene Putze können auch gröbere Zuschläge, wie Sände oder Sandsteingranulate, enthalten.

In Dispersionsfarben werden im allgemeinen feinteilige Füllstoffe bevorzugt.

Zur Erhöhung der Deckkraft und zur Einsparung von Weißpigmenten werden in Dispersionsfarben häufig vorzugsweise feinteilige Füllstoffe, wie z.B. gefälltes Calciumcarbonat oder Mischungen verschiedener Calciumcarbonate mit unterschiedlichen Teilchengrößen eingesetzt. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan 1,1-diphosphonsaures Natrium sowie Naphthalinsulfonsäuresalze, insbesondere deren Natriumsalze. Als Dispergiermittel können darüber hinaus geeignete Aminoalkohole, wie z.B. 2-Amino-2-methylpropanol, verwendet werden. Die Dispergiermittel bzw. Netzmittel werden vorzugsweise in einer Menge von 0,1 bis 2 Gew.-% bezogen auf das Gesamtgewicht der Dispersionsfarbe, eingesetzt.

Ferner können die Hilfsmittel auch Verdickungsmittel umfassen, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyn-olidon, Natriumpolyacrylate, wasserlösliche Copolymerisate auf Acryl- und Methacrylsäurebasis, wie Acrylsäure/Acrylamid- und (Meth)acrylsäure/Acrylester-Copolymerisate und sog. Assoziatiwerdicker, wie Styrol-Maleinsäureanhyddd-Polymerisate oder vorzugsweise dem Fachmann bekannte hydrophob modifizierte Polyetherurethane, (HEUR), hydrophob modifizierte Acrylsäure-Copolymere (HASE) und Polyetherpolyole.

Auch anorganische Verdickungsmittel, wie z.B. Bentonite oder Hectorit, können verwendet werden.

Die Verdickungsmittel werden vorzugsweise in Mengen von 0,1 bis 3 Gew.-%, besonders bevorzugt 0,1 bis 1 Gew.-%, bezogen auf das Gesamtgewicht der wässrigen Zubereitung, verwendet.

Auch können die erfindungsgemäßen, wässrigen Zubereitungen vernetzende Zusätze enthalten. Derartige Zusätze können sein: aromatische Ketone, wie z.B. Alkylphenylketone, die gegebenenfalls am Phenylring einen oder mehrere Substituenten aufweisen, oder Benzophenon und substituierte Benzophenone als Photoinitiatoren. Für diesen Zweck geeignete Photoinitiatoren werden z.B. in der DE-A-38 27 975 und der EP-A-0 417 568 offenbart. Geeignete, vernetzend wirkende Verbindungen sind auch wasserlösliche Verbindungen mit mindestens zwei Aminogruppen, beispielsweise Dihydrazide aliphatischer Dicarbonsäuren, wie sie z.B. in der DE-A-39 01 073 offenbart werden, wenn das Vinylester-Copolymerisat P Carbonylgruppen enthaltende Monomere copolymerisiert enthält.

Darüber hinaus können als Hilfsmittel in den erfindungsgemäßen, wässrigen Zubereitungen auch Wachse aus Basis von Paraffinen und Polyethylen, sowie Mattierungsmittel, Entschäumer, Konservierungs- oder Hydrophobiermittel, Biozide, Fasern sowie weitere dem Fachmann bekannte Additive eingesetzt werden.

Mit den erfindungsgemäßen Dispersionen können neben lösungsmittel- und weichmacherfreien Zubereitungen selbstverständlich auch Beschichtungssysteme hergestellt werden, die Lösungsmittel und/oder Weichmacher als Filmbildehilfsmitte enthalten. Filmbildehilfsmittel sind dem Fachmann allgemein bekannt und können üblicherweise in Mengen von 0,1 bis 20 Gew.-%, bezogen auf das in der Zubereitung enthaltene Vinylester-Copolymerisat, eingesetzt werden, so dass die wässrige Zubereitung eine Mindestfilmbildetemperatur von weniger als 15°C, vorzugsweise im Bereich von 0 bis 10°C, aufweist. Der Einsatz dieser Filmbildehilfsmittel ist allerdings in Anbetracht der vorteilhaften Eigenschaften der erfindungsgemäßen Kunststoff-Dispersionen nicht notwendig. In einer bevorzugten Ausführungsform enthalten die erfindungsgemäßen, wässrigen Zubereitungen deshalb kein Filmbildehilfsmittel.

Die erfindungsgemäßen, wässrigen Zubereitungen sind stabile fluide Systeme, die man zur Beschichtung von einer Vielzahl von Substraten verwenden kann. Folglich betrifft die vorliegende Erfindung auch Verfahren zum Beschichten von Substraten sowie die Beschichtungsmittel selbst. Geeignete Substrate sind beispielsweise Holz, Beton, Metall, Glas, Keramiken, Plastik, Putze, Tapeten, Papier, gestrichen, grundierte oder verwitterte Untergründe. Das Aufbringen der Zubereitung auf das zu beschichtende Substrat erfolgt in einem von der Ausgestaltung der Zubereitung abhängigen Weise. Das Aufbringen kann, abhängig von der Viskosität und dem Pigmentgehalt der Zubereitung sowie dem Substrat mittels Rollen, Bürsten, Rakeln oder als Spray erfolgen.

Die Erfindung wird im folgenden anhand von Ausführungsbeispielen näher beschrieben, ohne dadurch jedoch

in irgendeiner Weise beschränkt zu werden.

Herstellung und Charakterisierung der efindungsgemäßen Kunststoff-Dispersionen

Die im Rahmen der Beispiele und Vergleichsbeispiele hergestellten Dispersionen wurden in einem 70 1 Druckautoklaven mit Mantelkühlung und einem zugelassenen Druckbereich bis 160 bar ausgeführt. Die in den nachfolgenden Beispielen verwendeten Teile und Prozente beziehen sich auf das Gewicht, soweit nicht anders vermerkt.

Vergleichsbeispiel 1

Herstellung einer nicht erfindungsgemäßen Vinylacetat / EthylenCopolymerisatdispersion mit nachfolgender Restmonomereneliminierung

In eine Druckapparatur mit Rührer, Mantelheizung und Dosierpumpen wurde eine wässrige Lösung, bestehend aus folgenden Bestandteilen, eingegeben:

> 18813 g Wasser, 84,2 g Natriumacetat, 5033 g einer 20 gew. %igen wässrigen Lösung eines Nonylphenolethoxylats mit 30 Mol Ethylenoxid, 67,1 g Natriumlaurylsulfat, 2013 g einer 10 gew. %-igen wässrigen Polyvinylalkohollösung (Viskosität der 4 gew.-%igen wässrigen Lösung 23 mPa*s), 566 g einer 30 gew. %-igen wässrigen Natriumvinylsulfonatlösung und 33 g einer 1 gew. %-igen wässrigen Lösung von FeII($SO_4$) x 7 $H_2O$. Der pH-Wert der Lösung betrug 7,2. Die Apparatur wurde von Luftsauerstoff befreit und es wurde Ethylen in die Apparatur gedrückt. Bei 20 bar Ethylendruck wurden eine Mischung aus 13,1 g Vinyltrimethoxysilan (VTM) und 2932 g Vinylacetat und 2,63 g Brüggolit E01 in 194 g Wasser gelöst zudosiert. Es wurde auf 60° C Innentemperatur erhitzt und bei 50°C eine Lösung aus 3,75 g 70%iger wässriger tert.-Butylhydroperoxid-Lösung in 194 g Wasser eindosiert. Es wurde zur Abführung der Reaktionswärme gekühlt. Bei Erreichen von 60°C wurde in 240 Minuten eine Mischung aus 121,1 g Vinyltrimethoxysilan (VTM) und 27.135 g Vinylacetat zudosiert sowie 26,6 g Brüggolit E01 in 1864 g Wasser gelöst innerhalb 240 Minuten und eine Lösung aus 38 g 70%iger wässriger tert.-Butylhydroperoxid-Lösung in 1964 g Wasser innerhalb 240 Minuten, wobei der Ethylendruck auf 35 bar gehalten wurde, bis 3355 g Ethylen im Reaktor waren. Nach Dosierende wurde eine Lösung aus 33,6 g Natriumpersulfat in 792 g Wasser zudosiert und die Innentemperatur auf 80° C erhöht und 1 Stunde bei dieser Temperatur gehalten. Unter Rühren wurde anschließend der Großteil des nicht umgesetzten Ethylens ausgegast und es wurden 2 1 Wasser zugegeben. Dann wurden unter Anlegen von Vakuum innerhalb von 2 Stunden 2 l Wasser abdestilliert, wodurch der Restvinylacetatgehalt der Dispersion auf 0,05 Gew. %, bezogen auf die Dispersion, reduziert wurde.

Beispiele V2 und 3-7

Allgemeine Arbeitsvorschrift für die Herstellung einer Vinylacetat / Ethylen-Copolymerisatdispersion mit nachfolgender Restmonomereneliminierung

In eine Druckapparatur mit Rührer, Mantelheizung und Dosierpumpen wurde eine wässrige Lösung, bestehend aus folgenden Bestandteilen, eingegeben:

> 18813 g Wasser, 84,2 g Natriumacetat, 5033 g einer 20 gew. %igen wässrigen Lösung eines Nonylphenolethoxylats mit 30 Mol Ethylenoxid, 67,1 g Natriumlaurylsulfat, 2013 g einer 10 gew. %-igen wässrigen Polyvinylalkohollösung (Viskosität der 4 gew.-%igen wässrigen Lösung 23 mPa*s), 566 g einer 30 gew. %-igen wässrigen Natriumvinylsulfonatlösung und 33 g einer 1 gew. %-igen wässrigen Lösung von Fe-II($SO_4$) x 7 $H_2O$. Der pH-Wert der Lösung betrug 7,2. Die Apparatur wurde von Luftsauerstoff befreit und es wurden 335 g Ethylen in die Apparatur gedrückt und die Ethylenzufuhr geschlossen. Bei Raumtemperatur wurde 30 % Monomermischung B und 2,63 g Brüggolit E01 in 194 g Wasser gelöst zudosiert. Es wurde auf 60° C Innentemperatur erhitzt und bei 50°C eine Lösung aus 3,75 g 70%iger wässriger tert.-Butylhydroperoxid-Lösung in 194 g Wasser eindosiert. Es wurde zur Abführung der Reaktionswärme gekühlt. Bei Erreichen von 60°C wurde in 90 Minuten 70% Monomermischung B zudosiert sowie 26,6 g Brüggolit E01 in 1964 g Wasser gelöst innerhalb 360 Minuten und eine Lösung aus 38 g 70%igen wässriger tert.-Butylhydroperoxid-Lösung in 1964 g Wasser innerhalb 360 Minuten. Nach Dosierende von Monomermischung B wurde die Monomermischung A in 270 Minuten zudosiert und durch Öffnen der Ethylenzufuhr der Kesselinnendruck auf 40 bar erhöht, wobei die Ethylenzufuhr bei diesem Druck soweit geöffnet blieb bis weitere 3020 g Ethylen eindosiert waren. Nach Dosierende Monomermischung A wurde eine Lösung aus 33,6 g Natriumpersulfat in 792 g Wasser zudosiert und die Innentemperatur auf 80° C erhöht und 1 Stunde bei dieser Temperatur gehalten. Unter Rühren wurde anschließend der Großteil des nicht umgesetzten Ethylens ausgegast und es wurden 2 l Wasser zugegeben. Dann wurden unter Anlegen von Vakuum innerhalb von 2 Stunden 2 l Wasser abdestilliert, wodurch der Restvinylacetatgehalt der Dispersion auf 0,05 Gew. %, bezogen auf die Dispersion, reduziert wurde.

Nach dieser allgemeinen Arbeitsvorschrift wurden die Beispiele 3 bis 7 sowie Vergleichsbeispiel V2 hergestellt. Einzelheiten der Zusammensetzung der Dispersionen der Beispiele V2 und 3-7 zeigt die folgende Tabelle 1.

Tabelle 1

| | Monomermischung B | Monomermischung A |
|---|---|---|
| Vergleichsbeispiel 2 | 9815 g Vinylacetat | 20385 g Vinylacetat |
| Beispiel 3 | 9772 g Vinylacetat und 43,6 g Vinyl-trimethoxysilan | 20295 g Vinylacetat und 90,6 g Vinyl-trimethoxysilan |
| Beispiel 4 | 9681 g Vinylacetat und 134,2 g Vinyl-trimethoxysilan | 20385 g Vinylacetat |
| Beispiel 5 | 9815 g. Vinylacetat | 20251 g Vinylacetat und 134,2 g Vinyl-trimethoxysilan |
| Beispiel 6 | 9717 g Vinylacetat und 98,1 g Vinyl-trimethoxysilan | 20181 g Vinylacetat und 203,9 g Vinyl-trimethoxysilan |
| Beispiel 7 | 9793 g Vinylacetat und 21,8 g Vinyl-trimethoxysilan | 20340 g Vinylacetat und 45,3 g Vinyl-trimethoxysilan |

<u>Anwendungsbeispiele</u>

Die Erfindung wird nachfolgend durch Formulierung von Dispersionsfarben bzw. - lacken mit in nachfolgenden Tabellen 2, 4 und 6 dargestellten Zusammensetzungen näher charakterisiert:

Tabelle 2: Dispersionsfarbe mit einer PVK von 77%

| Bestandteile | Gewichtsteile |
|---|---|
| Wasser | 301,5 |
| Dispergiermittel (Natriumpolyphosphat, 10 %-ige Lösung) | 5,0 |
| Celluloseether (Typ MH, hochviskos) | 4,0 |
| Dispergiermittel, Na-Salz einer Polyacrylsäure | 3,5 |
| Entschäumer auf Mineralölbasis | 2,0 |
| 10%ige Natronlauge | 2,0 |
| Pigment, Titandioxid | 80,0 |
| Füllstoff, Calciumcarbonat, Teilchengröße 2 µm | 235,0 |
| Füllstoff, Calciumcarbonat Teilchengröße 5 µm | 205,0 |
| Füllstoff Aluminiumsilikat | 35,0 |
| Copolymerisatdispersion[1)] | 125,0 |
| Konservierungsmittel | 2,0 |
| [1]) Es wurden die Copolymere der Beispiele 2 bis 7 verwendet (vergl. Tabelle 1) | |

Die pulverförmige Methylhydroxyethylcellulose wurde in das Wasser eingestreut und unter Rühren gelöst, dann wurden die Lösungen der Na-Salze von Polyacrylsäure und Polyphosphorsäure und die 10 Gew. %-ige Natronlauge unter Rühren zugegeben. Der erhaltenen viskosen Lösung wurde das Konservierungsmittel und der Entschäumer zugesetzt. Unter Rühren mittels eines Dissolvers wurden zunächst bei einer Rührgeschwindigkeit von 2000 U/min Aluminiumsilikat eindispergiert und dann unter Steigerung der Rührgeschwindigkeit auf 5000 U/min Titandioxid und die Calciumcarbonattypen zugegeben. Es wurde weiter 20 Minuten bei 5000 U /Min dispergiert, wobei die Temperatur der Pigment/Füllstoffpaste auf 60° C anstieg. Man ließ sie auf 30° C abkühlen. Der pH-Wert betrugt 9,3.

Um die Parameter der beschriebenen Copolymerdispersionen zu untersuchen, wurden jeweils 875 g der Pigment/Füttstoffpaste mit 125 g der jeweils zu prüfenden Copolymerdispersion verrührt (3 Minuten Lenardrührer bei 1500

U/Min.). Es wurden Dispersionsfarben mit einem Festkörpergehalt von etwa 63 Gew. % und mit einer Pigmentvolumenkonzentration (PVK) von etwa 77 % erhalten.

Die Nassabriebbeständigkeit (WSR) dieser Farben wurde mittels der Vliesmethode (ISO 11998) getestet. Dazu wurde die Abtragung der Beschichtung nach 28 Tagen Lagerung (28 d) über den Massenverlust des Farbfilms bestimmt. Aus der Farbdichte, der gescheuerten Flächen und dem Massenverlust der Farbfilms wurde dann der Farbabtrag in μm errechnet.

Die wesentliche Charakteristik der unterschiedlichen Dispersionsfarben ist die Scheuerbeständigkeit (WSR), Die Prüfergebnisse sind in Tabelle 3 dargestellt. Tabelle 3:

| | WSR [μm] |
|---|---|
| Vergleichsbeispiel 2 (ohne Silan) | 75 |
| Beispiel 3 | 50 |
| Beispiel4 | 53 |
| Beispiel5 | 40 |
| Beispiel 6 | 36 |
| Beispiel 7 | 54 |

Tabelle 4: Dispersionsfarbe mit einer PVK von 54,7 %

| Bestandteile | Gewichtsteile |
|---|---|
| Wasser | 285,6 |
| Celluloseether (Typ MH, hochviskos) | 2,7 |
| Dispergiermittel, Na-Salz einer Polyacrylsäure | 5,4 |
| Entschäumer auf Mineralölbasis | 5,4 |
| 10%ige Natronlauge | 2,7 |
| Pigment, Titandioxid | 271,5 |
| Füllstoff, Calciumcarbonat Teilchengröße 1 μm | 203,7 |
| Copolymerisatdispersion[1)] | 200,0 |
| PU-Verdicker 20%ige Lösung | 20,4 |
| Konservierungsmittel | 2,7 |
| [1)] Es wurden die Copolymere der Beispiele 2 bis 7 verwendet (vergl. Tabelle 1) | |

Die pulverförmige Methylhydroxyethylcellulose wurde in das Wasser eingestreut und unter Rühren gelöst, dann wurde die Lösung des Na-Salzes der Polyacrylsäure und die 10 %-ige Natronlauge unter Rühren zugegeben. Der erhaltenen viskosen Lösung wurde das Konservierungsmittel und der Entschäumer zugesetzt. Unter Rühren mittels eines Dissolvers wurden bei einer Rührgeschwindigkeit auf 5000 U/min Titandioxid und das Calciumcarbonat zugegeben. Es wurde weiter 20 Minuten bei 5000 U /Min dispergiert, wobei die Temperatur der Pigment/Füllstoffpaste auf 60° C anstieg. Man ließ sie auf 30° C abkühlen. Der pH-Wert betrugt 9,3.

Um die Parameter der beschriebenen Copolymerdispersionen zu untersuchen, wurden jeweils 800 g der Pigment/Füllstoffpaste mit 200 g der jeweils zu prüfenden Copolymerdispersion verrührt (3 Minuten Lenardrührer bei 1500 U/Min.). Es wurden Dispersionsfarben mit einer Pigmentvolumenkonzentration (PVK) von etwa 55 % erhalten.

Die Nassabriebbeständigkeit (WSR) dieser Farben wurde mittels der Vliesmethode (ISO 11998) getestet. Dazu wurde die Abtragung der Beschichtung nach 28 Tagen Lagerung (28 d) über den Massenverlust des Farbfilms bestimmt. Aus der Farbdichte, der gescheuerten Flächen und dem Massenverlust der Farbfilms wurde dann der Farbabtrag in μm errechnet.

Die wesentliche Charakteristik der unterschiedlichen Dispersionsfarben ist die Scheuerbeständigkeit (WSR). Die Prüfergebnisse sind in Tabelle 5 dargestellt.

Tabelle 5:

| | WSR [μm] |
|---|---|
| Vergleichsbeispiel 2 (ohne Silan) | 33 |
| Beispiel 3 | 28 |
| Beispiel 4 | 30 |
| Beispiel 5 | 25 |
| Beispiel 6 | 22 |
| Beispiel 7 | 30 |

Tabelle 6: Dispersionsfarbe mit einer PVK von 38 %

| Bestandteile | Gewichtsteile |
|---|---|
| Wasser | 214,2 |
| Celluloseether (Typ MH, hochviskos) | 2,0 |
| Dispergiermittel, Na-Salz einer Polyacrylsäure | 4,0 |
| Entschäumer auf Mineralölbasis | 4,0 |
| 10%ige Natronlauge | 2,0 |
| Pigment, Titandioxid | 203,6 |
| Füllstoff, Calciumcarbonat Teilchengröße 1 μm | 152,7 |
| Copolymerisatdispersion[1)] | 400,0 |
| PU-Verdicker 20%ige Lösung, | 15,3 |
| Konservierungsmittel | 2,0 |
| [1)] Es wurden die Copolymere der Beispiele 2 bis 7 verwendet (vergl. Tabelle 1) | |

Die pulverförmige Methylhydroxyethylcellulose wurde in das Wasser eingestreut und unter Rühren gelöst, dann wurde die Lösung des Na-Salzes der Polyacrylsäure und die 10 Gew. %-igen Natronlauge unter Rühren zugegeben. Der erhaltenen viskosen Lösung wurde das Konservierungsmittel und der Entschäumer zugesetzt. Unter Rühren mittels eines Dissolvers wurden bei einer Rührgeschwindigkeit auf 5000 U/min Titandioxid und das Calciumcarbonat zugegeben. Es wurde weiter 20 Minuten bei 5000 U /Min dispergiert, wobei die Temperatur der Pigment/Füllstoffpaste auf 60° C anstieg. Man ließ sie auf 30° C abkühlen. Der pH-Wert betrugt 9,3.

Um die Parameter der beschriebenen Copolymerdispersionen zu untersuchen, wurden jeweils 600 g der Pigment/Füllstoffpaste mit 400 g der jeweils zu prüfenden Copolymerdispersion verrührt (3 Minuten Lenardrührer bei 1500 U/Min.). Es wurden Dispersionslacke mit einer Pigmentvolumenkonzentration (PVK) von etwa 37,7 % erhalten.

Die Nassabriebbeständigkeit (WSR) dieser Farben wurde mittels der Vliesmethode (ISO 11998) getestet. Dazu wurde die Abtragung der Beschichtung nach 28 Tagen Lagerung (28 d) über den Massenverlust des Farbfilms bestimmt. Aus der Farbdichte, der gescheuerten Flächen und dem Massenverlust der Farbfilms wurde dann der Farbabtrag in μm errechnet.

Zur Prüfung der Blockfestigkeit der Farbformulierung mit einer PVK von 38 % wurden Objektträger mit den entsprechenden Dispersionslacken mit einem Rakel der Spalthöhe 200 μm beschichtet. Nach 24 stündigem Trocknen unter Normklima (23°C, 50 % rel. Luftfeuchtigkeit) wurden zwei beschichtete Objektträger mit ihrer beschichteten Seite aufeinander gelegt und 1 Stunde bei Raumtemperatur mit 1 kg belastet. Anschließend wurde das Gewicht bestimmt, um die beschichteten Objektträger wieder voneinander zu trennen.

Die wesentlichen Charakteristiken der unterschiedlichen Dispersionsfarben sind die Scheuerbeständigkeit (WSR)und die Blockfestigkeit. Die Prüfergebnisse sind in Tabelle 7 dargestellt.

Tabelle 7:

| | WSR [μm] | Blockfestigkeit g/6,25cm$^2$ |
|---|---|---|
| Vergleichsbeispiel 1 | 7 | 2000 |
| Vergleichsbeispiel 2 (ohne Silan) | 8 | 830 |
| Beispiel 3 | 6 | 600 |
| Beispiel 4 | 7 | 660 |
| Beispiel 5 | 5 | 550 |
| Beispiel 6 | 4 | 500 |
| Beispiel 7 | 7 | 690 |

Die Messwerte der Nassabriebbeständigkeit der mit einer erfindungsgemäßen Dispersion (Beispiel 5) hergestellten Dispersionsfarben verdeutlichen, dass sich im Vergleich zu mit einer Dispersion mit homogener Silanverteilung im Copolymerisat (Beispiel 3) hergestellten Dispersionsfarben eine deutliche Verbesserung der WSR erreichen lässt. Zusätzlich zeichnen sich diese Dispersionsfarben durch eine deutliche Verbesserung der Blockingeigenschaften im Vergleich zu einer mit nicht erfindungsgemäßer Dispersion nach Vergleichsbeispiel 1 hergestellten Dispersionsfarbe mit einer PVK von 38% aus.

**Patentansprüche**

**1.** Wässrige Kunststoff-Dispersion auf Basis eines Vinylester-Copolymerisats mit einem Feststoffgehalt von bis zu 80 Gew.-% und einer Mindestfilmbildetemperatur unterhalb von 20°C, wobei das Vinylester-Copolymerisat durch folgende Merkmale **gekennzeichnet** ist:

- es ist ein Mehrstufenpolymerisat und leitet sich von mindestens einem Homo- oder Copolymerisat A und von mindestens einem Homo- oder Copolymerisat B ab,
- das Copolymerisat A leitet sich von einer Monomerzusammensetzung A ab, die ein weiches Copolymerisat mit einer Glasübergangstemperatur im Bereich von 0 bis 20°C ergeben würde,
- das Homo- oder Copolymerisat B leitet sich von einer Monomerzusammensetzung B ab, die ein hartes Homo- oder Copolymerisat mit einer Glasübergangstemperatur im Bereich von 20 bis 50°C ergeben würde
- es werden Monomerzusammensetzungen A und B eingesetzt, die Polymerisate A und B ergeben, deren Glasübergangstemperaturen sich um mindestens 10 K unterscheiden,
- die Summe der Anteile der Polymerisate A und B im Vinylester-Copolymerisat beträgt mindestens 50 Gew. %, bezogen auf das Vinylester-Copolymerisat,
- das Gewichtsverhältnis von Monomerzusammensetzung A zu Monomerzusammensetzung B liegt im Bereich von 95/5 bis 5195;
- die Monomerzusammensetzung A enthält 50 bis 100 Gew.-% mindestens eines Vinylesters von Carbonsäuren mit 1 bis 18 C-Atomen (M1), bezogen auf die Gesamtmasse der in Monomerzusammensetzung A eingesetzten Monomeren,
- die Monomerzusammensetzung B enthält 50 bis 100 Gew.-% mindestens eines Vinylesters von Carbonsäuren mit 1 bis 18 C-Atomen (M1), bezogen auf die Gesamtmasse der in Monomerzusammensetzung B eingesetzten Monomeren,
- mindestens eine der Monomerzusammensetzungen A oder B enthält 0,05 bis 10 Ges.-% mindestens einer ungesättigten, copolymerisierbaren silicium-organischen Verbindung (M4), bezogen auf die Gesamtmasse der in dieser Monomerzusammensetzung eingesetzten Monomeren,
- das Vinylester Copolymerisat enthält, bezogen auf die Gesamtmasse der zur Herstellung des Vinylester Copolymerisats verwendeten Monomeren, 0 bis 3 Gew.-% von mindestens einem ethylenisch ungesättigten, ionischen Monomeren (M3) abgeleitete Struktureinheiten,
- das Vinylester Copolymerisat enthält, bezogen auf die Gesamtmasse der zur Herstellung des Vinylester Copolymerisats verwendeten Monomeren, 0 bis 10 Gew.-% von mindestens einem ethylenisch ungesättigten, nichtionischen Monomeren (M5) abgeleitete Struktureinheiten,

die wässrige Kunststoff-Dispersion enhält 0 bis 3 Gew.-%, an ionischen Emulgatoren (S1),
die wässrige Kunststoff-Dispersion enhält mindestens 0,5 Gew.-% an nichtionischen Emulgatoren (S2), und

das Verhältnis der Gesamtmasse an ionischen Komponenten (M3) und (S1) zur eingesetzten Gesamtmenge an nichtionischen Komponenten (M5) und (S2) ist kleiner als 1.

2. Kunststoff-Dispersion gemäß Anspruch 1, **dadurch gekennzeichnet, dass** die Homo- oder Copolymerisate A und/oder B als Vinylester von Carbonsäuren mit 1 bis 18 Kohlenstoffatomen (M1) Vinylester von Carbonsäuren mit 1 bis 8 Kohlenstoffatomen, Vinylester von gesättigten, verzweigten Monocarbonsäuren mit 9,10 oder 11 Kohlenstoffatomen im Säurerest, Vinylester von längerkettigen, gesättigten und ungesättigten Fettsäuren, Vinylester der Benzoesäure oder der p-tert.-Butylbenzoesäure sowie Gemische derselben polymerisiert enthalten.

3. Kunststoff-Dispersion gemäß Anspruch 1, **dadurch gekennzeichnet, dass** die Homo- oder Copolymerisate A und/oder B als Vinylester von Carbonsäuren mit 1 bis 18 Kohlenstoffatomen (M1) Vinylacetat polymerisiert enthalten.

4. Kunststoff-Dispersion gemäß Anspruch 1, **dadurch gekennzeichnet, dass** die Copolymerisate A und/oder B monoethylenisch ungesättigte und gegebenenfalls halogenierte Kohlenwasserstoffe mit 2 bis 4 Kohlenstoffatomen (M2), vorzugsweise Ethen, copolymerisiert enthalten.

5. Kunststoff-Dispersion gemäß Anspruch 1, **dadurch gekennzeichnet, dass** die Homo- oder Copolymerisate A und/oder B als ethylenisch ungesättigte, ionische Monomere (M3) ungesättigte Monocarbonsäuren, ungesättigte Dicarbonsäuren oder deren Halbester mit Alkanolen, ungesättigte Sulfonsäuren und/oder ungesättigte Phosphonsäure copolymerisiert enthalten.

6. Kunststoff-Dispersion gemäß Anspruch 1, **dadurch gekennzeichnet, dass** die von Monomerzusammensetzung A oder die von Monomerzusammensetzungen A und B abgeleiteten Copolymerisate bis zu 10 Gew.-%, bezogen auf die Gesamtmasse der in der Monomerzusammensetzung eingesetzten Monomeren, von mindestens einer ungesättigten, copolymerisierbaren Silicium-organischen Verbindung (M4) abgeleitete Struktureinheiten enthalten.

7. Kunststoff-Dispersion gemäß Anspruch 1, **dadurch gekennzeichnet, dass** das Vinylester-Copolymerisat bis zu 30 Gew.-% mindestens eines weiteren, ethylenisch ungesättigten Monomeren (M6), bezogen auf die Gesamtmasse der zur Herstellung des Vinylester-Copolymerisats eingesetzten Monomere, copolymerisiert enthält.

8. Kunststoff-Dispersion gemäß Anspruch 1, **dadurch gekennzeichnet, dass** sie als ionische Emulgatoren (S1) anionische Emulgatoren enthält.

9. Kunststoff-Dispersion gemäß Anspruch 1, **dadurch gekennzeichnet, dass** sie, bezogen auf die Gesamtmasse der zur Herstellung des Vinylester-Co polymerisats verwendeten Monomere, 1 bis 8 Gew.-% an nichtionischen Emulgatoren (S2) enthält.

10. Kunststoff-Dispersion gemäß Anspruch 1, **dadurch gekennzeichnet, dass** das Verhältnis der Gesamtmenge an ionischen Komponenten (M3) und (S1) zur eingesetzten Gesamtmenge an nichtionischen Komponenten (M5) und (S2) einen Wert zwischen 0,0 und 0,9 annimmt.

11. Kunststoff-Dispersion gemäß Anspruch 1, **dadurch gekennzeichnet, dass** diese Schutzkolloide enthält vorzugsweise Polyvinylalkohole, Stärke- und Cellulosederivate sowie Vinylpyrrolidon.

12. Verfahren zur Herstellung einer Kunststoff-Dispersion gemäß Anspruch 1, **dadurch gekennzeichnet, dass** durch wässrige, radikalische Emulsionspolymerisation eines Monomers oder einer Monomermischung B zunächst ein Homo- oder Copolymerisat B hergestellt wird und anschließend in der wässrigen Dispersion des Homo- oder Copolymerisats B durch radikalische Emulsionspolymerisation eines Monomers oder einer Monomermischung A das Homo- oder Copolymerisat A hergestellt wird, wobei die radikalische Emulsionspolymerisation in Gegenwart von nichtionischen Emulgatoren (S2) und gegebenenfalls in Gegenwart von ethylenisch ungesättigten, ionischen Monomeren (M3) und/oder ionischen Emulgatoren (S1) durchgeführt wird, so dass die Gesamtmasse an nichtionischen Emulgatoren (S2) im Endprodukt mindestens 0,5 Gew.-% beträgt, und das Verhältnis der Gesamtmasse an ionischen Komponenten (M3) und (S1) zur eingesetzten Gesamtmenge an nichtionischen Komponenten (M5) und (S2) im Endprodukt kleiner als 1 beträgt, mit der Maßgabe, dass die Herstellung des Homo- oder Copolymerisats B auch nach der Herstellung des Homo- oder Copolymerisats A erfolgen kann.

13. Verfahren gemäß Anspruch 12, **dadurch gekennzeichnet, dass** die radikalische Emulsionspolymerisation in Gegenwart von das Molekulargewicht regelnden Substanzen erfolgt, insbesondere in Gegenwart von organischen

Thioverbindungen, Silanen, Allylalkoholen oder Aldehyden.

**14.** Verwendung einer Kunststoff-Dispersion gemäß Anspruch 1 als wässrige Zubereitung zur Beschichtung von Substraten.

**15.** Verwendung einer Kunststoff-Dispersion gemäß Anspruch 1 als Bindemittel in pigmenthaltigen, wässrigen Zubereitungen.

**16.** Verwendung einer Kunststoff-Dispersion gemäß Anspruch 1 als Bindemittel in kunstharzgebundenen Putzen, Fliesenklebern, Anstrichmitteln, Dichtmassen, Versiegelungsmassen oder Papierstreichmassen.

**17.** Verwendung einer Kunststoff-Dispersion gemäß Anspruch 1 als Bindemittel in Dispersionsfarben.

**18.** Wässrige Zubereitung zur Beschichtung von Substraten enthaltend eine Kunststoff-Dispersion gemäß Anspruch 1.

**19.** Pigmenthaltige, wässrige Zubereitung enthaltend eine Kunststoff-Dispersion gemäß Anspruch 1.

**20.** Dispersionsfarbe enthaltend eine Kunststoff-Dispersion gemäß Anspruch 1

**21.** Lebensmittelbeschichtung enthaltend eine Kunststoff-Dispersion gemäß Anspruch 1.

**22.** Papierstreichmasse enthaltend eine Kunststoff-Dispersion gemäß Anspruch 1.

## Claims

**1.** An aqueous plastic dispersion based on a vinyl ester copolymer having a solids content of up to 80% by weight and a minimum film formation temperature below 20°C, the vinyl ester copolymer being **characterized by** the following features:

- it is a multistage polymer and is derived from at least one homo- or copolymer A and at least one homo- or copolymers B,
- the copolymer A is derived from a monomer composition A which would give a soft copolymer having a glass transition temperature in the range from 0 to 20°C,
- the homo- or copolymer B is derived from a monomer composition B which would give a hard homo- or copolymer having a glass transition temperature in the range from 20 to 50°C,
- monomer compositions A and B which give polymers A and B whose glass transition temperatures differ by at least 10 K are used,
- the sum of the proportions of the polymers A and B in the vinyl ester copolymer are at least 50% by weight, based on the vinyl ester copolymer,
- the weight ratio of monomer composition A to monomer composition B is in the range from 95/5 to 5/95,
- the monomer composition A contains from 50 to 100% by weight of at least one vinyl ester of carboxylic acids having 1 to 18 carbon atoms (M1), based on the total mass of the monomers used in monomer composition A,
- the monomer composition B contains from 50 to 100% by weight of at least one vinyl ester of carboxylic acids having 1 to 18 carbon atoms (M1), based on the total mass of the monomers used in monomer composition B,
- at least one of the monomer compositions A or B contains from 0.05 to 10% by weight of at least one unsaturated, copolymerizable organosilicon compound (M4), based on the total mass of the monomers used in this monomer composition,
- the vinyl ester copolymer contains, based on the total mass of the monomers used for the preparation of the vinyl ester copolymer, from 0 to 3% by weight of structural units derived from at least one ethylenically unsaturated, ionic monomer (M3),
- the vinyl ester copolymer contains, based on the total mass of the monomers used for the preparation of the vinyl ester copolymer, from 0 to 10% by weight of structural units derived from at least one ethylenically unsaturated, nonionic monomer (M5),

the aqueous plastic dispersion contains from 0 to 3% by weight of ionic emulsifiers (S1),
the aqueous plastic dispersion contains at least 0.5% by weight of nonionic emulsifiers (S2), and
the ratio of the total mass of ionic components (M3) and (S1) to the total amount of nonionic components (M5) and

(S2) used is less than 1.

2. The plastic dispersion as claimed in claim 1, wherein the homo- or copolymers A and/or B contain, as vinyl esters of carboxylic acids having 1 to 18 carbon atoms (M1), vinyl esters of carboxylic acids having 1 to 8 carbon atoms, vinyl esters of saturated, branched monocarboxylic acids having 9, 10 or 11 carbon atoms in the acid radical, vinyl esters of relatively long-chain, saturated and unsaturated fatty acids, vinyl esters of benzoic acid or of p-tert-butyl benzoic acid and mixtures thereof incorporated in the form of polymerized units.

3. The plastic dispersion as claimed in claim 1, wherein the homo- or copolymers A and/or B contain vinyl acetate incorporated in the form of polymerized units as vinyl esters of carboxylic acids having 1 to 18 carbon atoms (M1).

4. The plastic dispersion as claimed in claim 1, wherein the copolymers A and/or B contain monoethylenically unsaturated and optionally halogenated hydrocarbons having 2 to 4 carbon atoms (M2), preferably ethene, incorporated in the form of copolymerized units.

5. The plastic dispersion as claimed in claim 1, wherein the homo- or copolymers A and/or B contain, as ethylenically unsaturated, ionic monomers (M3), unsaturated monocarboxylic acids, unsaturated dicarboxylic acids or monoesters thereof with alkanols, unsaturated sulfonic acids and/or unsaturated phosphonic acids incorporated in the form of copolymerized units.

6. The plastic dispersion as claimed in claim 1, wherein the copolymers derived from monomer composition A or the copolymers derived from monomer compositions A and B contain up to 10% by weight, based on the total mass of the monomers used in the monomer composition, structural units derived from at least one unsaturated, copolymerizable organosilicon compound (M4).

7. The plastic dispersion as claimed in claim 1, wherein the vinyl ester copolymer contains up to 30% by weight of at least one further, ethylenically unsaturated monomer (M6), based on the total mass of the monomers used for the preparation of the vinyl ester copolymer, incorporated in the form of copolymerized units.

8. The plastic dispersion as claimed in claim 1, which contains anionic emulsifiers as ionic emulsifiers (S1).

9. The plastic dispersion as claimed in claim 1, which contains, based on the total mass of the monomers used for the preparation of the vinyl ester copolymer, from 1 to 8% by weight of nonionic emulsifiers (S2).

10. The plastic dispersion as claimed in claim 1, wherein the ratio of the total amount of ionic components (M3) and (S1) to the total amount of nonionic components (M5) and (S2) used assumes a value of from 0.0 to 0.9.

11. The plastic dispersion as claimed in claim 1, which contain protective colloids, preferably polyvinyl alcohols, starch derivatives and cellulose derivatives and vinylpyrrolidone.

12. A method for producing a plastic dispersion as claimed in claim 1, wherein a homo- or copolymer B is first prepared by aqueous, free radical emulsion polymerization of a monomer or of a monomer mixture B and then the homo- or copolymer A is prepared in the aqueous dispersion of the homo- or copolymer B by free radical emulsion polymerization of a monomer or of a monomer mixture A, the free radical emulsion polymerization being carried out in the presence of nonionic emulsifers (S2) and optionally in the presence of ethylenically unsaturated, ionic monomers (M3) and/or ionic emulsifiers (S1) so that the total mass of the nonionic emulsifiers (S2) in the end product is at least 0.5% by weight, and the ratio of the total mass of ionic components (M3) and (S1) to the total amount of nonionic components (M5) and (S2) used in the end product is less than 1, with the proviso that the preparation of the homo- or copolymer B can also be effected after the preparation of the homo- or copolymer A.

13. The method as claimed in claim 12, wherein the free radical emulsion polymerization is effected in the presence of substances regulating the molecular weight, in particular in the presence of organic thio compounds, silanes, allyl alcohols or aldehydes.

14. The use of a plastic dispersion as claimed in claim 1 as an aqueous preparation for the coating of substrates.

15. The use of a plastic dispersion as claimed in claim 1 as a binder in pigment-containing, aqueous preparations.

**16.** The use of a plastic dispersion as claimed in claim 1 as a binder in synthetic resin-bound renders, tile adhesives, paints, sealing compounds and sealing compositions or papercoating slips.

**17.** The use of a plastic dispersion as claimed in claim 1 as binder in emulsion paints.

**18.** An aqueous preparation for coating substrates, containing a plastic dispersion as claimed in claim 1.

**19.** A pigment-containing, aqueous preparation containing a plastic dispersion as claimed in claim 1.

**20.** An emulsion paint containing a plastic dispersion as claimed in claim 1.

**21.** A food coating containing a plastic dispersion as claimed in claim 1.

**22.** A papercoating slip containing a plastic dispersion as claimed in claim 1.

**Revendications**

**1.** Dispersion aqueuse de plastique à base d'un copolymère d'ester de vinyle avec une teneur en solide de jusqu'à 80 % en poids et une température minimale de formation de film en dessous de 20 °C, le copolymère d'ester de vinyle étant **caractérisé par** les caractéristiques suivantes :

c'est un polymère multi-étagé et dérive d'au moins un homo- ou d'un copolymère A et d'au moins un homo- ou d'un copolymère B,
le copolymère A dérive d'une composition de monomères A qui donnerait un copolymère mou avec une température de transition vitreuse dans l'intervalle de 0 à 20 °C,
l'homo- ou le copolymère B dérive d'une composition de monomères B qui donnerait un homo- ou un copolymère dur avec une température de transition vitreuse dans l'intervalle de 20 à 50 °C,
on utilise des compositions de monomères A et B qui donnent des polymères A et B dont les températures de transition vitreuse diffèrent d'au moins 10 K,
la somme des parts des polymères A et B dans le copolymère d'ester de vinyle est d'au moins 50 % en poids, rapporté au copolymère d'ester de vinyle,
le rapport pondéral de la composition de monomères A à la composition de monomères B est compris dans l'intervalle de 95/5 à 5/95,
la composition de monomères A contient de 50 à 100 % en poids d'au moins un ester de vinyle d'acides carboxyliques avec 1 à 18 atomes de carbone (M1), rapporté à la masse totale des monomères utilisés dans la composition de monomères A,
la composition de monomères B contient de 50 à 100 % en poids d'au moins un ester de vinyle d'acides carboxyliques avec 1 à 18 atomes de carbone (M1), rapporté à la masse totale des monomères utilisés dans la composition de monomères B,
au moins une des compositions de monomères A ou B contient de 0,05 à 10 % en poids d'au moins un composé organique insaturé copolymérisable de silicium (M4), rapporté à la masse totale des monomères utilisés dans cette composition de monomères,
le copolymère d'ester de vinyle contient, rapporté à la masse totale des monomères utilisés à la préparation du copolymère d'ester de vinyle, de 0 à 3 % en poids d'unités de structure dérivées d'au moins un monomère ionique éthyléniquement insaturé (M3),
le copolymère d'ester de vinyle contient, rapporté à la masse totale des monomères utilisés à la préparation du copolymère d'ester de vinyle, de 0 à 10 % en poids d'unités de structure dérivées d'au moins un monomère non ionique éthyléniquement insaturé (M5),
la dispersion aqueuse de plastique contient de 0 à 3 % en poids d'émulsifiants ioniques (S1),
la dispersion aqueuse de plastique contient au moins 0,5 % en poids d'émulsifiants non ioniques (S2), et
le rapport de la masse totale de composants ioniques (M3) et (S1) à la quantité totale mise en oeuvre de composants non ioniques (M5) et (S2) est inférieur à 1.

**2.** Dispersion de plastique selon la revendication 1, **caractérisée en ce que** les homo- ou les copolymères A et/ou B contiennent comme esters de vinyle d'acides carboxyliques avec 1 à 18 atomes de carbone (M1) des esters de vinyle d'acides carboxyliques avec 1 à 8 atomes de carbone, des esters de vinyle d'acides monocarboxyliques saturés ramifiés avec 9, 10 ou 11 atomes de carbone dans le radical acide, des esters de vinyle d'acides gras à

chaîne plus longue, saturés et insaturés, des esters de vinyle de l'acide benzoïque ou de l'acide p-tert.-butylbenzoïque, à l'état polymérisé ainsi que des mélanges de ceux-ci.

3. Dispersion de plastique selon la revendication 1, **caractérisée en ce que** les homo- ou les copolymères A et/ou B contiennent comme esters de vinyle d'acides carboxyliques avec 1 à 18 atomes de carbone (M1) de l'acétate de vinyle à l'état polymérisé.

4. Dispersion de plastique selon la revendication 1, **caractérisée en ce que** les copolymères A et/ou B contiennent des hydrocarbures monoéthyléniquement insaturés et, le cas échéant, halogénés, avec 2 à 4 atomes de carbone, de préférence de l'éthène, à l'état copolymérisé.

5. Dispersion de plastique selon la revendication 1, **caractérisée en ce que** les homo- ou les copolymères A et/ou B contiennent comme monomères éthyléniquement insaturés ioniques (M3) des acides monocarboxyliques insaturés, des acides dicarboxyliques insaturés ou leurs hémi-esters avec des alcanols, des acides sulfoniques insaturés et/ou des acides phosphoniques insaturés à l'état copolymérisé.

6. Dispersion de plastique selon la revendication 1, **caractérisée en ce que** les copolymères dérivés de la composition de monomères A ou ceux dérivés de la composition de monomères B contiennent jusqu'à 10 % en poids, rapporté à la masse totale des monomères utilisés dans la composition de monomères, d'unités de structure dérivées d'au moins un composé organique insaturé copolymérisable de silicium (M4).

7. Dispersion de plastique selon la revendication 1, **caractérisée en ce que** le copolymère d'ester de vinyle contient jusqu'à 30 % en poids, rapporté à la masse totale des monomères utilisés pour la préparation du copolymère d'ester de vinyle, d'au moins un autre monomère éthyléniquement insaturé (M6) à l'état copolymérisé.

8. Dispersion de plastique selon la revendication 1, **caractérisée en ce qu'**elle contient comme émulsifiants ioniques (S1) des émulsifiants anioniques.

9. Dispersion de plastique selon la revendication 1, **caractérisée en ce qu'**elle contient, rapporté à la masse totale des monomères utilisés à la préparation du copolymère d'ester de vinyle, 1 à 8 % en poids d'émulsifiants non ioniques (S2).

10. Dispersion de plastique selon la revendication 1, **caractérisée en ce que** le rapport de la quantité totale de composés ioniques (M3) et (S1) à la quantité totale mise en oeuvre de composés non ioniques (M5) et (S2) prend une valeur comprise entre 0,0 et 0,9.

11. Dispersion de plastique selon la revendication 1, **caractérisée en ce que** celle-ci contient des colloïdes de protection, de préférence des alcools polyvinyliques, des dérivés de l'amidon et de la cellulose, ainsi que de la vinylpyrrolidone.

12. Procédé de préparation d'une dispersion aqueuse de plastique selon la revendication 1, **caractérisé en ce que** par une polymérisation radicalaire en émulsion aqueuse d'un monomère ou d'un mélange de monomères B, on prépare d'abord un homo- ou un copolymère B et qu'on prépare ensuite dans la dispersion aqueuse de l'homo- ou du copolymère B, par polymérisation radicalaire en émulsion d'un monomère ou d'un mélange de monomères A, l'homo- ou le copolymère A, la polymérisation radicalaire en émulsion étant effectuée en présence d'émulsionnants non ioniques (S2) et, le cas échéant, en présence de monomères ioniques éthyléniquement insaturés (M3) et/ou d'émulsionnants ioniques (S1), de telle sorte que la masse totale d'émulsionnants non ioniques (S2) dans le produit final soit d'au moins 0,5 % en poids, que le rapport de la masse totale de composants ioniques (M3) et (S1) à la quantité totale mise en oeuvre de composants non ioniques (M5) et (S2) dans le produit final soit inférieure à 1, avec la condition que la préparation de l'homo- ou du copolymère B puisse aussi s'effectuer après la préparation de l'homo- ou du copolymère A.

13. Procédé selon la revendication 12, **caractérisé en ce que** la polymérisation radicalaire en émulsion s'effectue en présence de substances régulant le poids moléculaire, en particulier en présence de composés soufrés, de silanes, d'alcools allyliques ou d'aldéhydes.

14. Utilisation d'une dispersion de plastique selon la revendication 1 comme préparation aqueuse pour le revêtement de substrats.

**15.** Utilisation d'une dispersion de plastique selon la revendication 1 comme liant dans des préparations aqueuses contenant des pigments.

**16.** Utilisation d'une dispersion de plastique selon la revendication 1 comme liant dans des crépis, des colles à carreaux, des peintures, des mastics d'étanchéité, des masses de scellement ou des produits de couchage de papier à liants en résine synthétique.

**17.** Utilisation d'une dispersion de plastique selon la revendication 1 comme liant dans des peintures à dispersion.

**18.** Préparation aqueuse contenant une dispersion de plastique selon la revendication 1 pour le revêtement de substrats.

**19.** Préparation aqueuse contenant des pigments, contenant une dispersion de plastique selon la revendication 1.

**20.** Peinture à dispersion contenant une dispersion de plastique selon la revendication 1.

**21.** Revêtement de denrées alimentaires contenant une dispersion de plastique selon la revendication 1.

**22.** Produit de couchage du papier contenant une dispersion de plastique selon la revendication 1.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19811314 A
- EP 0347760 A
- EP 0609756 A
- EP 1018535 A
- DE 19853461 A
- DE 19739936 A
- EP 0444827 A
- WO 0274856 A
- US 4269749 A
- EP 0778290 A
- EP 0040419 A
- EP 0567812 A
- DE 4435423 A
- DE 3827975 A
- EP 0417568 A
- DE 3901073 A


### In der Beschreibung aufgeführte Nicht-Patentliteratur


- **T.G. Fox.** *Bull. Am. Ph. Soc.,* 1956, vol. 1, 123
- Ullmann's Enzyklopädie der technischen Chemie. 1980, vol. 19, 1-718
- Ullmann's Encyclopedia of Industrial Chemistry. VCH, 1992, vol. A 21, 169
- **Brandrup, E.H.** Immergut Polymer Handbook. J. Wiley, 1989
- **Brandrup, E.H.** Immergut Polymer Handbook. J. Wiley, 1989, VI/214
- **F.M. Menger ; J. S. Keiper.** *Angew. Chem.,* 2000, 1980-1996
- Methoden der organischen Chemie. **Houben-Weyl.** Makromolekulare Stoffe. Georo-Thieme Verlag, 1961, vol. XIV/I, 192-208
- **A. Guyot et al.** Reactive surfactants in heterophase polymerization. *Acta Polym.,* 1999, 57-66
- Methoden der organischen Chemie. **Houben-Weyl.** Makromolekulare Stoffe. Georg Thieme Verlag, 1961, vol. XIV/I, 411-420
- Encyclopedia of Polymer Science and Technology. John Wiley & Sons Inc, 1966, vol. 5, 847